# EUROPÄISCHE PATENTANMELDUNG

(11) **EP 4 471 704 A2**
(43) Veröffentlichungstag der Anmeldung: **04.12.2024**
(21) Anmeldenummer: 24205328.8
(22) Anmeldetag: 28.07.2015
(51) Int. Cl.: G06Q 40/08

(54) **VERFAHREN ZUM ERFASSEN EINES ZUSTANDS EINES OBJEKTS**

(30) Priorität: 28.07.2014 DE 102014011201
(62) Teilanmeldung aus: 15745152.7
(71) Anmelder: Intareg AG, 9413 Oberegg (CH)
(72) Erfinder: Hörmann, Markus Friedrich, 89281 Altenstadt/Illereichen (DE)
(74) Vertreter: Diehl & Partner

(57) **Zusammenfassung**

Verfahren zum Erfassen eines Zustands eines Objekts, umfassend:
Senden eines Auftrags durch einen Auftraggeber an einen Auftragnehmer;
Bereitstellen eines Softwaremoduls, welches, wenn es auf einem mobilen Datenerfassungsgerät, welches wenigstens eine Kamera und ein Positionserfassungssystem umfasst, ausgeführt wird,
- das Positionserfassungssystem veranlasst, eine aktuelle Position des mobilen Datenerfassungsgeräts zu bestimmen und die aktuelle Position repräsentierende Positionsdaten zu erzeugen,
- die Kamera veranlasst, ein Bild des Objekts aufzunehmen und das Bild repräsentierende Bilddaten zu erzeugen, und
- wenigstens die Bilddaten ausgibt;

Empfangen wenigstens der ausgegebenen Bilddaten durch den Auftraggeber;
Bestimmen eines Zeitschätzwertes für eine Zeitdauer, welche zwischen dem Bestimmen der aktuellen Position und dem Aufnehmen des Bildes vergangen ist;
Bestimmen eines Abstandsschätzwertes für einen Abstand zwischen dem aktuellen Standort des Objekts und einer Soll-Position des Objekts;
Bestimmen eines ersten Teilzustands des Objekts in Abhängigkeit von dem bestimmten Abstandsschätzwert und dem bestimmten Zeitschätzwert, und Klassifizieren des Zustands des Objekts basierend auf dem ersten Teilzustand.

## Beschreibung

Die Erfindung betrifft ein Verfahren zum Erfassen eines Zustands eines Objekts. Betroffen sind insbesondere dingliche Objekte, wie beispielsweise Sachen.

Zum Erfassen oder Überprüfen eines Zustands eines Objekts ist es herkömmlicherweise erforderlich, dass sich eine Person zu dem Objekt begibt und anschließend den Zustand des Objekts erfasst oder überprüft. Eine solche Vorgehensweise wird herkömmlicherweise von Interessenten des Objekts, beispielsweise Banken oder Versicherungsgesellschaften, praktiziert. Banken und Versicherungen finanzieren bzw. versichern Objekte, wie beispielsweise Baumaschinen, Gebäude oder dergleichen, und wollen regelmäßig über den Zustand der Objekte Auskunft erhalten.

Eine Übereinstimmung zwischen dem erfassten Zustand und dem tatsächlichen Zustand des Objekts ist für die Interessenten lediglich dann mit hinreichender Sicherheit gewährleistet, wenn die Person, die den Zustand des Objekts erfasst, eine vertrauenswürdige Person ist. In der Regel erfassen daher Mitarbeiter der Interessenten den Zustand der jeweiligen Objekte. Das Erfassen eines Zustands eines Objekts ist daher für die Interessenten zeitaufwendig und kostenintensiv. Darüber hinaus kann in der Regel nur ein Bruchteil der zu überprüfenden Objekte regelmäßig überprüft werden, da die Anzahl der zu überprüfenden Objekte im Verhältnis zu der Anzahl der zur Überprüfung bereitgestellten Mitarbeiter sehr groß ist.

Zur Überprüfung bzw. zu dem Zustand eines Objekts zählen insbesondere der aktuelle Standort des Objekts, die Beschaffenheit des Objekts, beispielsweise äußeres Erscheinungsbild, Abnutzung, Betriebsleistung und -stunden und dergleichen, aber auch die Existenz des Objekts.

Es ist daher eine Aufgabe der vorliegenden Erfindung, ein Verfahren vorzuschlagen, mit dem die Nachteile herkömmlicher Verfahren, insbesondere des Verfahren der persönlichen Überprüfung durch einen Mitarbeiter des Interessenten, überwunden werden. Insbesondere ist es eine Aufgabe der vorliegenden Erfindung, ein Verfahren vorzuschlagen, das hinsichtlich des Zeitaufwands, der Kosten und der Anzahl der möglichen Überprüfungen in einem bestimmen Zeitraum gegenüber den herkömmlichen Verfahren verbessert ist.

Eine Ausführungsform gemäß einem ersten Aspekt der Erfindung, ein Verfahren zum Erfassen eines Zustands eines Objekts, wird nachfolgend beschrieben. Der Zustand eines Objekts kann insbesondere betreffen bzw. umfassen: den aktuellen Standort des Objekts, den Verlauf des Standorts des Objekts, die Beschaffenheit des Objekts, insbesondere äußeres Erscheinungsbild, Abnutzung, Betriebskennzahlen und dergleichen, und physische Existenz des Objekts.

Die Ausführungsform des Verfahrens zum Erfassen eines Zustands eines Objekts umfasst ein Senden eines Auftrags durch ein Auftraggeber an einen Auftragnehmer. Durch den Auftrag macht der Auftraggeber den Auftragnehmer darauf aufmerksam, dass der Auftragnehmer den Zustand des Objekts erfassen soll. Das Senden des Auftrags erfolgt beispielsweise durch Versenden einer E-Mail, einer SMS, eines Briefs oder einer anderen, bevorzugt elektronischen, Nachrichtenübertragung.

Die Ausführungsform des Verfahrens umfasst ferner ein Bereitstellen eines Softwaremoduls. Zum Erfassen des Zustands des Objekts stellt der Auftraggeber dem Auftragnehmer ein Softwaremodul bereit, welches zum Erfassen des Zustands des Objekts auf einem mobilen Datenerfassungsgerät auszuführen ist.

Das mobile Datenerfassungsgerät umfasst wenigstens eine Kamera und ein Positionserfassungssystem. Beispielsweise umfasst das mobile Datenerfassungsgerät eine in das mobile Datenerfassungsgerät integrierte Digitalfotokamera als Kamera und ein auf GPS (NAVSTAR global positioning system) basierendes System als Positionserfassungssystem. Die Kamera kann zur Aufnahme von Fotografien des Objekts dienen, aus welchen beispielsweise der Zustand oder ein Teilzustand des Objekts abgeleitet werden kann, Das Positionserfassungssystem kann zur Feststellung der aktuellen Position des mobilen Datenerfassungsgeräts dienen. Die tatsächliche Position des Objekts, also der aktuelle Standort des Objekts, ist durch die aktuelle Position des mobilen Datenerfassungsgeräts annähernd repräsentiert, wenn sich das mobile Datenerfassungsgerät zum Zeitpunkt der Positionsbestimmung desselben in der Nähe des aktuellen Standorts des Objekts befindet.

Der Auftrag kann eine Bezeichnung des Objekts und ein Softwaremodul, das vom Auftraggeber bereitgestellt wird, umfassen. In diesem Fall muss der Auftragnehmer die Bezeichnung des Objekts und das Softwaremodul nicht gesondert beziehen, sondern kann diese aus dem Auftrag entnehmen.

Alternativ dazu kann der Auftrag eine Aufforderung zum Beschaffen einer Bezeichnung des Objekts und/oder eine Aufforderung zum Beschaffen des Softwaremoduls umfassen. Auf diese Weise kann der Auftrag ausgebildet sein, wenn das Softwaremodul und/oder die Bezeichnung des Objekts nicht unmittelbar in dem Auftrag enthalten sind. Der Auftrag kann dann jedoch Anweisungen enthalten, mit denen der Auftragnehmer die Bezeichnung des Objekts und/oder das Softwaremodul beschaffen kann. Beispielsweise kann der Auftrag den Auftragnehmer dazu auffordern, die Bezeichnung des Objekts und/oder das Softwaremodul von einem Server des Auftraggebers zu beschaffen.

Die Bezeichnung des Objekts kann beispielsweise den Namen des Objekts, eine Identifikationsnummer des Objekts, einen Ort, an dem sich das Objekt befinden soll, die sogenannte Soll-Position, aber auch vom Auftragnehmer zu erfassende Eigenschaften, Zustände und Ansichten des Objekts, welche beispielsweise auf Fotografien zu erfassen sind, umfassen.

Das Verfahren kann ferner ein Beschaffen des Softwaremoduls umfassen. Das Beschaffen des Softwaremoduls kann insbesondere dadurch erfolgen, dass der Auftragnehmer sich an einem Server des Auftraggebers anmeldet und von diesem das Softwaremodul bezieht. Hierzu kann beispielsweise auf dem Server des Auftraggebers ein Authentifizierungsverfahren vorgesehen sein, mit dem die Identität des Auftragnehmers geprüft wird, und das Beziehen des Softwaremoduls von dem Server des Auftraggebers nur dann möglich ist, wenn eine erfolgreiche Authentifizierung vorliegt. Alternativ kann das Beschaffen des Softwaremoduls auch dadurch erfolgen, dass das Softwaremodul durch eine im Internet zugänglichen Plattform, wie beispielsweise ein App-Store, oder durch ein Speichermedium, zum Beispiel einer CD, DVD oder dergleichen, bereitgestellt wird. Auf diese Weisen kann ein speziell für den Zweck des Verfahrens entworfenes Softwaremodul ausschließlich für bestimmte Auftragnehmer oder für die Öffentlichkeit bereitgestellt werden. Alternativ kann auch ein beliebiges geeignetes Softwaremodul bereitgestellt werden.

Das Verfahren kann ferner ein Beschaffen einer Bezeichnung des Objekts umfassen, wobei das Beschaffen einer Bezeichnung des Objekts insbesondere durch Anmelden des Auftragnehmers auf einem Server des Auftraggebers und Beziehen einer Bezeichnung des Objekts von dem Server des Auftraggebers erfolgt. In diesem Fall muss der Auftrag die Bezeichnung des Objekts nicht umfassen und die Bezeichnung des Objekts kann lediglich vorbestimmten Auftragnehmern zugänglich sein, welche sich an dem Server des Auftraggebers anmelden können und zum Beziehen der Bezeichnung des Objekts autorisiert sind.

Gemäß einer weiteren Ausführungsform des Verfahrens umfasst das Verfahren ein Installieren des Softwaremoduls auf dem mobilen Datenerfassungsgerät.

Gemäß einer weiteren Ausführungsform des Verfahrens umfasst das Verfahren ferner ein Bereitstellen eines mobilen Datenerfassungsgeräts durch den Auftraggeber oder den Auftragnehmer. Wird das mobile Datenerfassungsgerät vom Auftraggeber bereitgestellt, kann das Softwaremodul mittels dem mobilen Datenerfassungsgerät bereitgestellt und/oder auf diesem installiert sein und dabei insbesondere den Auftrag umfassen. Das Senden des Auftrags kann hierbei beispielsweise durch Übersenden des mobilen Datenerfassungsgeräts an den Auftragnehmer erfolgen.

Wenn auf dem mobilen Datenerfassungsgerät ausgeführt, veranlasst das Softwaremodul das Positionserfassungssystem dazu, eine aktuelle Position des mobilen Datenerfassungsgeräts zu bestimmen und die aktuelle Position repräsentierende Positionsdaten zu erzeugen. Die aktuelle Position des mobilen Datenerfassungsgeräts repräsentiert annähernd die aktuelle Position des Objekts, wenn die Positionsbestimmung in der Nähe des Objekts durchgeführt wird. Die durch die Positionsdaten repräsentierte aktuelle Position des mobilen Datenerfassungsgeräts kann also zur Beurteilung der Position des Objekts und damit zur Erfassung des Zustands bzw. eines Teilzustands des Objekts dienen.

Ferner veranlasst das Softwaremodul die Kamera dazu, ein Bild des Objekts aufzunehmen und das Bild repräsentierende Bilddaten zu erzeugen. Bilder des Objekts können, wie die Positionsdaten, zur Erfassung des Zustands bzw. eines Teilzustands des Objekts dienen. Insbesondere kann die Aufnahme eines Bildes des Objekts als Nachweis dafür angesehen werden, dass sich das mobile Datenerfassungsgerät zum Zeitpunkt der Aufnahme des Bildes in der Nähe des Standorts des Objekts befunden hat. Liegen der Zeitpunkt der Positionsbestimmung und der Zeitpunkt der Aufnahme des Bildes des Objekts zueinander in einer bestimmen Beziehung vor, insbesondere nahe zusammen, kann die durch die Positionsdaten repräsentierte Position des mobilen Datenerfassungsgeräts den tatsächlichen Standort des Objekts annähernd repräsentieren.

Zur Verarbeitung der vom Softwaremodul erfassten Daten durch den Auftraggeber gibt das Softwaremodul wenigstens die Bilddaten aus. Es können aber auch Teile von oder alle durch das Softwaremodul bestimmten Daten, Werte und Ergebnisse ausgegeben werden. Die Ausgabe kann, beispielsweise über eine beliebige Datenschnittstelle, erfolgen, sodass ausgegebene Daten zum einen direkt an den Auftraggeber gesendet werden können oder zum anderen auf einen Datenspeicher, insbesondere ein optisches oder magnetisches Speichermedium, ausgegeben werden können. Das Speichermedium kann dann beispielsweise postalisch an den Auftraggeber gesendet werden.

Ferner umfasst das Verfahren ein Empfangen wenigstens der ausgegeben Bilddaten durch den Auftraggeber. Durch das Empfangen wenigstens der ausgegeben Bilddaten kann der Auftraggeber den Zustand des Objekts anhand der Bilddaten beurteilen. Sind noch weitere Daten ausgegeben, können diese ebenfalls zur Beurteilung des Zustands des Objekts verwendet werden.

Das Verfahren umfasst ferner ein Bestimmen eines Zeitschätzwertes für eine Zeitdauer, welche zwischen dem Bestimmen der aktuellen Position und dem Aufnehmen des Bildes vergangen ist. Der Zeitschätzwert ist ein Maß für die Zeitdauer, welche zwischen dem Bestimmen der aktuellen Position des Datenerfassungsgeräts und dem Aufnehmen des Bildes des Objekts vergeht. Aus dem Zeitschätzwert kann daher abgeschätzt werden, ob die Positionserfassung und die Aufnahme des Bildes zueinander zeitnah erfolgt sind, oder ob eine längere Dauer zwischen der Positionserfassung und dem Aufnehmen des Bildes verstrichen ist. Der Zeitschätzwert stellt daher eine Möglichkeit bereit, zu beurteilen, ob die Positionsdaten den Standort des Objekts annähernd repräsentieren können.

Der Zeitschätzwert ist in solchen Situationen besonders hilfreich, in denen die Positionsbestimmung in unmittelbarer Umgebung des Objekts nicht möglich ist, beispielsweise, wenn eine Positionsbestimmung durch das GPS unmöglich ist. Der Auftragnehmer kann dann beispielsweise ein Bild des Objekts aufnehmen und sich an einen Ort begeben, an dem das Positionserfassungssystem die aktuelle Position des mobilen Datenerfassungssystems bestimmen kann. Erfüllt die zwischen dem Aufnehmen des Bildes und der Positionsbestimmung verstrichene Zeit, welche durch den Zeitschätzwert abgeschätzt wird, eine bestimmte Bedingung, beispielweise ist der Zeitschätzwert kleiner als eine vorbestimmte Zeitdauer, können die Positionsdaten als valide Daten bestimmt werden, d.h. die Positionsdaten dem weiteren Verfahren zu Grunde gelegt werden.

Ferner umfasst das Verfahren ein Bestimmen eines Abstandschätzwertes für einen Abstand zwischen dem aktuellen Standort des Objekts und einer Soll-Position des Objekts. Die Soll-Position des Objekts ist ein (bevorzugt vom Auftraggeber definierter) Standort des Objekts. Die Soll-Position kann diejenige Position sein, an dem der Auftraggeber das Objekt vermutet.

Der Abstandsschätzwert soll dem Auftraggeber anzeigen können, wie weit der tatsächliche Standort des Objekts von der Soll-Position des Objekts entfernt ist, d.h., ob sich das Objekt an dem vom Auftraggeber vermutetem Standort befindet. Als Abstandsschätzwert kann beispielsweise der Abstand zwischen der durch die Positionsdaten repräsentierten Position des mobilen Datenerfassungsgeräts und der Soll-Position des Objekts dienen. Ist das mobile Datenerfassungsgerät zum Zeitpunkt der Positionsbestimmung in der Nähe des Objekts, was durch den Zeitschätzwert abgeschätzt wird, kann der Abstandsschätzwert beispielsweise anzeigen, ob sich das Objekt in der Nähe der Soll-Position befindet.

Ferner umfasst das Verfahren ein Bestimmen eines ersten Teilzustands des Objekts in Abhängigkeit von dem bestimmten Abstandschätzwertes und dem bestimmten Zeitschätzwert. Hierdurch werden die von dem Softwaremodul bestimmten Schätzwerte zu einem ersten Teilzustand des Objekts verarbeitet, damit beispielsweise der Auftraggeber den Zustand des Objekts einfach beurteilen kann. Der erste Teilzustand kann beispielsweise dazu verwendet werden, zu beurteilen, ob die Positionsbestimmung in der Nähe der Soll-Position des Objekts und die Aufnahme des Bildes des Objekts zeitnah zur Positionsbestimmung erfolgten. Damit kann beispielsweise sichergestellt werden, ob sich das Objekt mit Sicherheit an der vom Auftraggeber festgelegten Soll-Position befindet.

Ferner umfasst das Verfahren ein Klassifizieren des Zustands des Objekts basierend auf dem ersten Teilzustand. Der erste Teilzustand und gegebenenfalls weitere Teilzustände bilden die Grundlage für eine finale Klassifizierung des Zustands des Objekts, welche bevorzugt durch den Auftraggeber erfolgt. Neben dem ersten Teilzustand, welcher wenigsten den Standort des Objekts relativ zur Soll-Position repräsentiert, kann auch eine aus dem Bild des Objekts abgeleitete Beschaffenheit des Objekts in die finale Klassifizierung einfließen. Beispielsweise kann die Klassifizierung des Objekts davon abhängen, ob die äußere Erscheinung des Objekts den Vorgaben des Auftraggebers entspricht.

Gemäß einer weiteren Ausführungsform des Verfahrens ist der erste Teilzustand des Objekts durch ein Funktionswert einer Funktion mit dem bestimmten Abstandswert und/oder dem bestimmten Zeitschätzwert als Argumenten repräsentiert. Der bestimmte Abstandsschätzwert und/oder der bestimmte Zeitschätzwert können so beispielsweise mit anderen Parametern gewichtet werden und beispielsweise auf eine Skala abgebildet werden. Der Skalenwert repräsentiert dabei den ersten Teilzustand des Objekts. Auf diese Weise können anwendungsspezifische Eigenheiten der Schätzwerte bei der Bestimmung des ersten Teilzustands berücksichtigt werden.

Gemäß einer weiteren Ausführungsform weist der erste Teilzustand ein erstes Ergebnis auf, wenn der Zeitschätzwert kleiner als ein vorbestimmter Zeitwert ist und wenn der Abstandsschätzwert kleiner als ein vorbestimmter Abstandswert ist; und der erste Teilzustand weist ein zweites Ergebnis auf, wenn der Zeitschätzwert nicht kleiner als ein vorbestimmter Zeitwert ist und/oder wenn der Abstandsschätzwert nicht kleiner als ein vorbestimmter Abstandswert ist. Der vorbestimmte Zeitwert und der vorbestimmte Abstandswert können vom Auftraggeber definierte Parameter sein. Beispielsweise können diese Maximalwerte darstellen, welche mit dem Zeitschätzwert bzw. mit dem Abstandsschätzwert verglichen werden. Durch den Vergleich kann der erste Teilzustand in das erste Ergebnis oder zweite Ergebnis eingeteilt werden. Der vorbestimmte Zeitwert kann beispielsweise kleiner als 5 Stunden, kleiner als 3 Stunden, kleiner als 1 Stunde, kleiner als 30 Minuten oder kleiner als 15 Minuten sein. Der vorbestimmte Abstandswert kann beispielsweise kleiner als 10 Kilometer, kleiner als 5 Kilometer, kleiner als 2 Kilometer, kleiner als 1 Kilometer, kleiner als 500 Meter, kleiner als 200 Meter, kleiner als 100 Meter oder kleiner als 50 Meter sein.

Gemäß einer weiteren Ausführungsform des Verfahrens wird der erste Teilzustand des Objekts durch einen Funktionswert einer Funktion mit einem einzigen Argument repräsentiert, wobei das Argument von dem bestimmten Abstandschätzwert und dem bestimmten Zeitschätzwert abhängig ist. Somit kann auch eine aus den Schätzwerten abgeleitete Größe als Kriterium für den ersten Teilzustand des Objekts verwendet werden. Insbesondere kann die Funktion prüfen, ob ein Quotient aus dem Abstandsschätzwert im Zähler und dem Zeitschätzwert im Nenner kleiner oder gleich einem Geschwindigkeitsschrankenwert ist, welcher kleiner als 200 km/h, kleiner als 100 km/h, kleiner als 75 km/h, kleiner als 50 km/h, kleiner als 30 km/h, kleiner als 10 km/h oder kleiner als 5 km/h ist.

Gemäß einer weiteren Ausführungsform des Verfahrens basiert das Klassifizieren des Zustands des Objekts ferner auf einem zweiten Teilzustand des Objekts, welcher beispielsweise durch eine Analyse des Bildes bestimmbar ist und insbesondere davon abhängig ist, ob das Objekt eine definierte Beschaffenheit aufweist. In dieser Ausführungsform nimmt neben dem ersten Teilzustand, welcher auf dem bestimmten Zeitschätzwert und dem bestimmten Abstandsschätzwert basiert, ein zweiter Teilzustand Einfluss auf die Klassifizierung des Zustands des Objekts. Der zweite Teilzustand kann insbesondere durch den Auftraggeber bestimmt werden. Aus der Analyse des Bildes kann der Auftraggeber beispielweise beurteilen, ob das Objekt eine vom Auftraggeber definierte Beschaffenheit aufweist.

Gemäß einer weiteren Ausführungsform des Verfahrens wird eine Zeitdauer, welche zwischen dem Senden des Auftrags und dem Empfang wenigstens der Bilddaten verstreicht, als der Zeitschätzwert bestimmt. Dieser Zeitschätzwert umfasst somit alle vom Auftragnehmer bzw. von dem Softwaremodul zu tätigenden Schritte des Verfahrens.

Gemäß einer weiteren Ausführungsform des Verfahrens wird eine Zeitdauer, welche zwischen dem Senden des Auftrags und dem Aufgeben wenigstens der Bilddaten verstreicht, als der Zeitschätzwert bestimmt. Hierdurch ist der Zeitschätzwert unabhängig von der Dauer, welche zwischen dem Ausgeben wenigstens der Bilddaten und dem Empfangen wenigstens der Bilddaten durch den Auftraggeber verstreicht. Dies ist insbesondere dann vorteilhaft, wenn die vom Softwaremodul ausgegebenen Daten auf einen Datenträger gespeichert werden, der Datenträger beispielsweise auf postalischen Weg zum Auftraggeber versendet wird und der Auftraggeber schließlich die ausgegebenen Daten einliest.

Gemäß einer weiteren Ausführungsform des Verfahrens wird eine Zeitdauer, welche zwischen dem Bestimmen der aktuellen Position und dem Aufnehmen des Bildes verstreicht, als der Zeitschätzwert bestimmt. Hierdurch ist ausschließlich diejenige Zeitdauer zur Bestimmung des ersten Teilzustands relevant, welche zwischen dem Bestimmen der aktuellen Position und dem Aufnehmen des Bildes verstreicht. Auf diese Weise ist die Bestimmung des ersten Teilzustands von denjenigen Zeitdauern der Schritte unabhängig, die vor dem Bestimmen der aktuellen Position und die nach dem Aufnehmen des Bildes erfolgen.

Gemäß einer weiteren Ausführungsform des Verfahrens wird ein Abstand, welcher auf der durch die Positionsdaten repräsentierten aktuellen Position und der Soll-Position des Objekts basiert, als der Abstandsschätzwert bestimmt. Auf diese Weise ist der Abstand zwischen dem mobilen Datenerfassungsgerät und der Soll-Position des Objekts dem Abstand zwischen dem tatsächlichen Standort des Objekts und der Soll-Position des Objekts annähernd gleich, wenn das mobile Datenerfassungsgerät in der Nähe des tatsächlichen Standorts Objekts ist.

Gemäß einer weiteren Ausführungsform des Verfahrens ist das Softwaremodul dazu konfiguriert, ab dem Senden des Auftrags nur für eine vorbestimmte Dauer ausführbar zu sein. Insbesondere verhindert das Softwaremodul die Ausführbarkeit desselben durch Modifizierung der das Softwaremodul verkörpernden Softwaremodulprogrammdaten. In dieser Ausführungsform wird verhindert, dass der Auftragnehmer unbeschränkt Zeit zur Erfassung des Zustands des Objekts bzw. der dafür von ihm erforderlichen Schritte hat. Alternativ kann ein Server des Auftraggebers dazu konfiguriert sein, das Empfangen wenigstens der Bilddaten ab dem Senden des Auftrags nur während einer vorbestimmten Dauer durchzuführen. Auch in dieser Ausführungsform wird dem Auftragnehmer nur eine vorbestimmte Dauer zur Erfassung des Zustands des Objekts eingeräumt. Insbesondere kann die vorbestimmte Dauer kleiner als 14 Tage, kleiner als 7 Tage, kleiner als 3 Tage, kleiner als 1 Tag, kleiner als 12 Stunden, kleiner als 6 Stunden, kleiner als 1 Stunde sein.

Gemäß einer weiteren Ausführungsform des Verfahrens bestimmt der Auftraggeber den Zeitschätzwert und/oder den Abstandsschätzwert und/oder den ersten Teilzustand und/oder klassifiziert den Zustand des Objekts. Nachdem der Zeitschätzwert, der Abstandsschätzwert und der erste Teilzustand von den Positionsdaten und den Bilddaten abgeleitet werden können, können erstgenannte Werte vom Auftraggeber, insbesondere von einem Server des Auftraggebers, bestimmt werden. Es kann allerdings auch nur eine Teilmenge aus dem Zeitschätzwert, dem Abstandsschätzwert und dem ersten Teilzustand durch den Auftraggeber bestimmt werden und der Rest der Werte durch das Softwaremodul bestimmt werden.

Gemäß einer Ausführungsform des Verfahrens umfasst das Ausgeben wenigstens der Bilddaten ferner ein Ausgeben der Positionsdaten und/oder des Zeitschätzwerts und/oder des Abstandsschätzwerts und/oder des ersten Teilzustands. Es können alle oder auch nur eine Teilmenge der durch das Softwaremodul bestimmten Informationen ausgegeben werden. Insbesondere können zum Beispiel die Bilddaten zusammen mit den Positionsdaten ausgegeben werden und der Auftraggeber bestimmt den Zeitschätzwert, den Abstandsschätzwert und den ersten Teilzustand selbst. Alternativ können auch die Bilddaten, der Zeitschätzwert und der Abstandsschätzwert ausgegeben werden und der Auftraggeber bestimmt den ersten Teilzustand selbst. Alternativ können die Bilddaten und der erste Teilzustand ausgegeben werden.

Gemäß einer weiteren Ausführungsform des Verfahrens umfasst das Verfahren ferner ein Senden der ausgegeben Bilddaten und/oder der ausgegebenen Positionsdaten und/oder des ausgegeben Zeitschätzwerts und/oder des ausgegeben Abstandsschätzwerts und/oder des ausgegeben ersten Teilzustands durch den Auftragnehmer an den Auftraggeber. Das Senden kann dabei durch eine elektronische Nachricht, insbesondere eine E-Mail oder dergleichen, durchgeführt. Alternativ können die ausgegeben Daten auf einen Datenträger ausgegeben werden und dieser wiederum an den Auftraggeber gesendet werden.

Gemäß einer weiteren Ausführungsform des Verfahrens umfasst das Empfangen wenigstens der Bilddaten ferner ein Empfangen der ausgegebenen Positionsdaten und/oder des ausgegebenen Zeitschätzwerts und/oder des ausgegebenen Abstandschätzwerts und/oder des ausgegebenen ersten Teilzustands, wobei insbesondere das Empfangen wenigstens der Bilddaten ein Auslesen eines Datenspeichers umfasst.

Gemäß einer weiteren Ausführungsform des Verfahrens veranlasst das Softwaremodul die Kamera dazu, ein Bild des Objekts aufzunehmen und das Bild repräsentierende Bilddaten zu erzeugen, nachdem die aktuelle Position des mobilen Datenerfassungsgeräts bestimmt ist und/oder die aktuelle Position repräsentierende Positionsdaten erzeugt wurden. Auf diese Weise ist die Reihenfolge festgelegt in der die Bestimmung der Position und die Aufnahme des Bildes stattfinden.

Gemäß einer weiteren Ausführungsform des Verfahrens umfasst das Verfahren ferner ein Auffordern eines Benutzers des mobilen Datenerfassungsgeräts zum Ausrichten der Kamera auf das Objekt und das Auslösen der Aufnahme des Bildes des Objekts. In dieser Ausführungsform legt der Benutzer des mobilen Datenerfassungsgeräts fest, welches Bild des Objekts aufgenommen wird und wann die Aufnahme des Bildes stattfindet.

Gemäß einer weiteren Ausführungsform des Verfahrens fordert das Softwaremodul einen Benutzer des mobilen Datenerfassungsgeräts zum Bestätigen der bestimmten aktuellen Position des mobilen Datenerfassungsgeräts auf und wartet, bis die Bestätigung vorliegt. Insbesondere wartet das Softwaremodul mit der Erzeugung der die aktuelle Position repräsentierenden Positionsdaten, bis die Bestätigung vorliegt. Auf diese Weise ist sichergestellt, dass die Positionsdaten auf Daten beruhen, welche vom Auftragnehmer genehmigt sind.

Gemäß einer weiteren Ausführungsform des Verfahrens kann das Auffordern des Benutzers des mobilen Datenerfassungsgeräts einen akustischen Hinweis und/oder einen auf einer Anzeige des mobilen Datenerfassungsgeräts angezeigten visuellen Hinweis umfassen.

Gemäß einer weiteren Ausführungsform des Verfahrens bestimmt das Positionserfassungssystem die Position des mobilen Datenerfassungsgeräts mittels eines globalen Navigationssatellitensystems und/oder eines Mobilfunksystems. Insbesondere kann zur Positionsbestimmung das globale Positionssystem GPS verwendet werden. Alternativ kann ein auf GSM oder dergleichen basierendes Mobilfunksystem verwendet werden.

Gemäß einer weiteren Ausführungsform des Verfahrens erfolgt das Senden des Auftrags durch eine SMS, eine E-Mail oder eine andere elektronische Nachricht.

Gemäß einer weiteren Ausführungsform des Verfahrens ist das mobile Datenerfassungsgerät ein Tablet-PC, ein Mobiltelefon, eine Brille, Uhr oder dergleichen, die eine elektronische Datenverarbeitung bereitstellen, oder ein anderes Computer-ähnliches Gerät.

Gemäß einem zweiten Aspekt der Erfindung umfasst ein Verfahren zum Erfassen eines Zustands eines Objekts, dass ein Softwaremodul auf einem mobilen Datenerfassungsgerät Schritte der hierin zuvor beschriebenen Ausführungsformen veranlasst und/oder ausführt.

Gemäß einem dritten Aspekt der Erfindung umfasst eine Ausführungsform der Erfindung ein computerlesbares Trägermedium, das Informationen enthält, die ein Computerprogramm verkörpern, das geeignet ist, einen Prozessor eines Datenerfassungsgeräts zu veranlassen, ein Verfahren gemäß einer der hierin beschriebenen Ausführungsformen auszuführen.

### Kurzbeschreibung der Figuren

- Figur 1: zeigt eine Ausführungsform eines Verfahrens zum Erfassen eines Zustands eines Objekts;
- Figur 2: zeigt eine weitere Ausführungsform eines Verfahrens zum Erfassen eines Zustands eines Objekts;
- Figur 3: zeigt eine weitere Ausführungsform eines Verfahrens zum Erfassen eines Zustands eines Objekts;
- Figur 4: zeigt weitere Schritte der Verfahren gemäß Figuren 1 bis 3 nach einem Senden eines Auftrags an einen Auftragnehmer;
- Figur 5: zeigt eine Ausgestaltung eines Schritts des Aufnehmens eines Bildes des Objekts und des Erzeugens von Bilddaten;
- Figur 6: zeigt eine Ausgestaltung eines Schritts der Positionsbestimmung und des Erzeugens von Positionsdaten;
- Figur 7: zeigt mögliche Zeitschätzwerte, welche den Verfahren gemäß den Figuren 1 bis 3 zugrunde gelegt werden können;
- Figur 8: zeigt eine Ausgestaltung eines ersten Teilzustands des Objekts in Abhängigkeit von einem Abstandsschätzwert und einem Zeitschätzwert; und
- Figur 9: zeigt eine Ausgestaltung einer Funktion zum Beurteilen eines ersten Teilzustands des Objekts.

### Detaillierte Beschreibung der Ausführungsformen

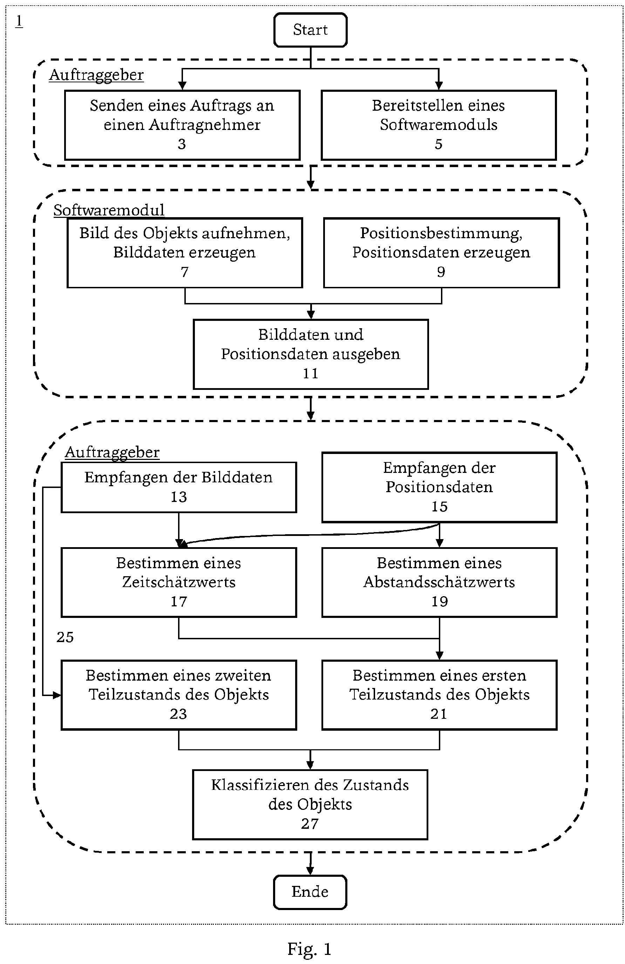

Figur 1 zeigt eine Ausführungsform eines Verfahrens (1) zum Erfassen eines Zustands eines Objekts. Das Verfahren (1) beginnt mit einem Senden eines Auftrags an einen Auftragnehmer (3) und ein Bereitstellen eines Softwaremoduls (5), jeweils durch den Auftraggeber. Die Reihenfolge zwischen dem Senden eines Auftrags an einen Auftragnehmer und dem Bereitstellen eines Softwaremoduls (5) kann beliebig sein, was in Figur 1 dadurch dargestellt ist, dass die beiden Schritte nebeneinander angeordnet sind.

Mit dem Senden eines Auftrags an einen Auftragnehmer (3) teilt der Auftraggeber dem Auftragnehmer mit, dass der Zustand des Objekts erfasst werden soll. Auf Seiten des Auftragnehmers werden die zum Erfassen des Zustands des Objekts erforderlichen Schritte mit Hilfe des Softwaremoduls, welches der Auftraggeber bereitstellt, durchgeführt. Das Senden eines Auftrags an einen Auftragnehmer (3) kann beispielsweise durch Versenden einer SMS, einer E-Mail oder einer anderen elektronischen Nachricht erfolgen.

Mit dem Senden eines Auftrags an einen Auftragnehmer (3) kann der Auftraggeber dem Auftragnehmer eine Bezeichnung des Objekts zukommen lassen. Der Auftragnehmer benötigt die Bezeichnung des Objekts, um zu erfahren, für welches Objekt ein Zustand zu bestimmen ist. Die Bezeichnung des Objekts kann beispielsweise den Namen des Objekts, eine Identifikationsnummer des Objekts, einen Ort, an dem sich das Objekt befinden soll, die sogenannte Soll-Position, aber auch zu erfassende Eigenschaften, Zustände und Ansichten des Objekts umfassen.

Das Bereitstellen eines Softwaremoduls (5) kann beispielsweise erfolgen, indem das Softwaremodul beim Senden eines Auftrags an einen Auftraggeber (3) mitgeliefert wird, zum Beispiel, indem das Softwaremodul in der E-Mail des Auftraggebers als Anhang enthalten ist oder indem das Softwaremodul auf einem dem Auftragnehmer zugesendeten Datenerfassungsgerät bereitgestellt ist.

Alternativ kann das Senden eines Auftrags an einen Auftragnehmer (3) und das Bereitstellen eines Softwaremoduls (5) auch in einem gemeinsamen Schritt erfolgen, beispielsweise indem der Auftraggeber dem Auftragnehmer ein Datenerfassungsgerät oder dergleichen zukommen lässt, auf welchem der Auftrag und das Softwaremodul bereitgestellt sind.

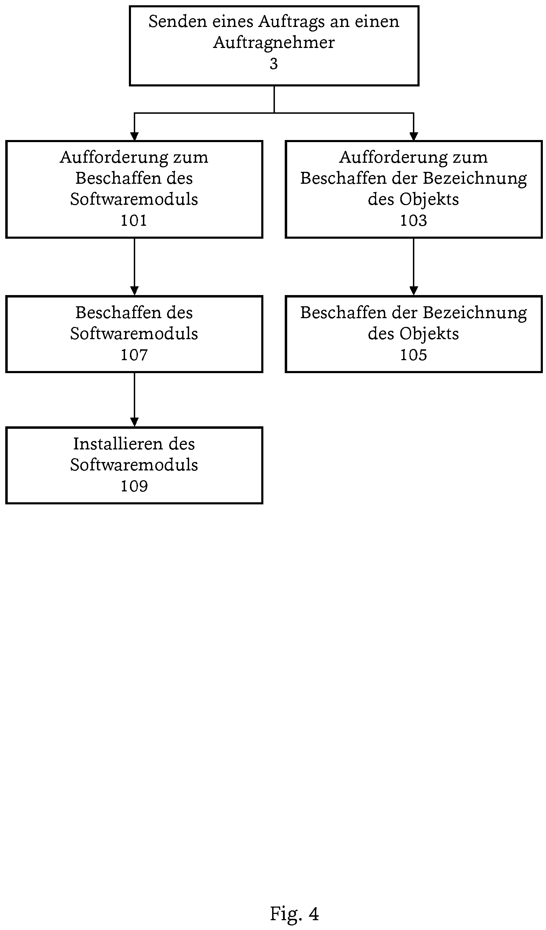

Das Senden eines Auftrags an ein Auftragnehmer (3) kann alternativ durch die in Figur 4 gezeigte Ausgestaltung erfolgen. In dieser Ausgestaltung umfasst der Auftrag eine Aufforderung an den Auftragnehmer, das Softwaremodul zu beschaffen (101) und/oder eine Aufforderung, die Bezeichnung des Objekts zu beschaffen (103).

Für den Fall, dass der Auftraggeber dem Auftragnehmer die Bezeichnung des Objekts nicht durch das Senden des Auftrags zukommen lässt, kann der Auftraggeber daher den Auftragnehmer dazu auffordern, sich die Bezeichnung des Objekts zu beschaffen. Das Verfahren (1) zum Erfassen eines Zustands eines Objekts umfasst dann ferner ein Beschaffen der Bezeichnung des Objekts (105). Der Auftragnehmer beschafft sich dabei die Bezeichnung des Objekts gemäß einer Weisung bzw. Anleitung des Auftrags. Dies kann beispielsweise dadurch geschehen, dass sich der Auftragnehmer an einem Server des Auftraggebers anmeldet und gemäß der Identität des Auftragnehmers die Bezeichnung des Objekts von dem Server des Auftraggebers bezieht.

Analog dazu kann der Auftrag eine Aufforderung zum Beschaffen des Softwaremoduls (101) umfassen. Das Verfahren (1) zum Erfassen eines Zustands eines Objekts umfasst dann ferner ein Beschaffen des Softwaremoduls (107). Der Auftragnehmer beschafft sich dabei das Softwaremodul, beispielsweise indem sich der Auftragnehmer an einem Server des Auftraggebers anmeldet und gemäß der Identität des Auftragnehmers das Softwaremodul von dem Server des Auftraggebers beziehen kann. Alternativ kann der Auftragnehmer das Softwaremodul auch von einer Plattform, welche beispielsweise im Internet zugänglich ist, oder von einem Datenträger, beispielsweise einer CD oder dergleichen, beziehen.

Unabhängig davon, ob das Softwaremodul in der Nachricht, mit welcher der Auftraggeber den Auftrag an den Auftragnehmer sendet, enthalten ist oder sich der Auftragnehmer das Softwaremodul erst beschaffen muss, kann das Verfahren (1) ferner ein Installieren des Softwaremoduls (109) umfassen. Gegebenenfalls ist für das Installieren des Softwaremoduls ein sogenannter Root-Check erforderlich, mit welchem geprüft wird, ob der Auftragnehmer bzw. ein Benutzer eines Geräts, insbesondere eines mobilen Datenerfassungsgeräts, auf dem das Softwaremodul installiert werden soll, zur Installation des Softwaremoduls berechtigt ist.

### Wird das Softwaremodul durch einen Benutzer eines mobilen

Datenerfassungsgeräts, welches wenigstens eine Kamera und ein Positionserfassungssystem umfasst, aber auch noch weitere Komponenten und Systeme umfassen kann, auf dem mobilen Datenerfassungsgerät, auf dem das Softwaremodul installiert ist, ausgeführt, so veranlasst das Softwaremodul das Positionserfassungssystem dazu, eine aktuelle Position des mobilen Datenerfassungsgeräts zu bestimmen und die aktuelle Position repräsentierende Positionsdaten zu erzeugen (9) (siehe Figur 1). Der Benutzer kann auch der Auftragnehmer selbst sein. Das Positionserfassungssystem kann beispielsweise ein GPS-Receiver mit einer entsprechenden Datenverarbeitungsvorrichtung, ein auf einem Mobilfunksystem basierendes System, welches eine aktuelle Position des Datenerfassungsgeräts erfassen kann, oder dergleichen sein.

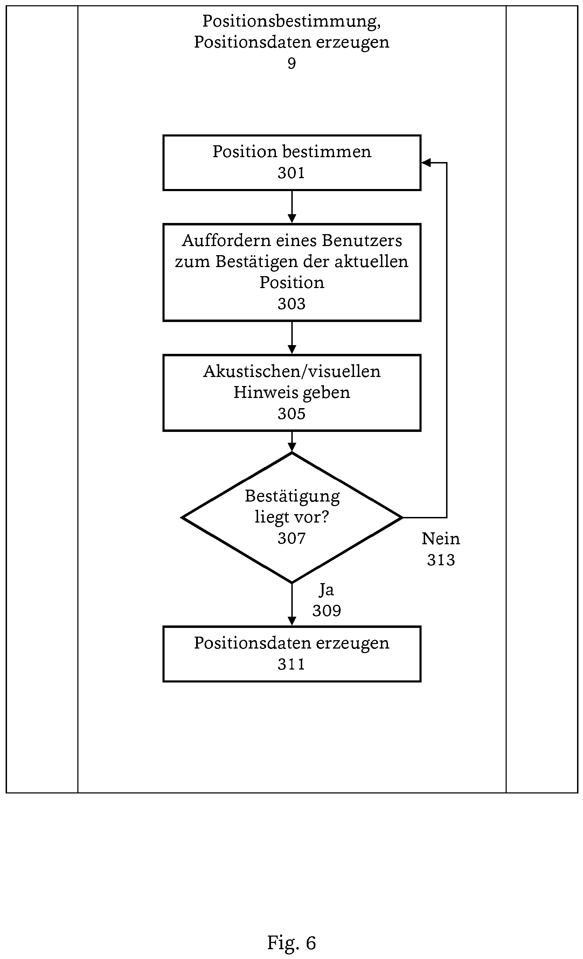

Die Positionsbestimmung und das Erzeugen der Positionsdaten (9) ist beispielhaft in Figur 6 erläutert. Hierin veranlasst zunächst das Softwaremodul das Positionserfassungssystem dazu, die aktuelle Position des mobilen Datenerfassungsgeräts zu bestimmen (301). Anschließend wird ein Benutzer des mobilen Datenerfassungsgeräts dazu aufgefordert, die aktuelle Position zu bestätigen (303). Da die bestimmte aktuelle Position für das weitere Verfahren von großer Bedeutung ist, dient der Schritt des Bestätigens der aktuellen Position dazu, dem Benutzer die Möglichkeit einzuräumen, die aktuelle Position gewollt zu erfassen und gegebenenfalls neu zu erfassen, wenn der Benutzer die aktuelle Position nicht für das weitere Verfahren verwenden möchte. Mit dem Auffordern des Benutzers zum Bestätigen der aktuellen Position (303) kann ein akustischer und/oder visueller Hinweis verbunden sein (305), welcher den Benutzer darauf hinweist, dass eine bestimmte aktuelle Position zu bestätigen ist. Es wird geprüft, ob eine Bestätigung vorliegt (307). Bestätigt der Benutzer die aktuelle Position (309), so ist der Benutzer damit einverstanden, dass die bestimmte aktuelle Position dem weiteren Verfahren zugrunde gelegt wird und das Softwaremodul erzeugt die die aktuelle Position repräsentierenden Positionsdaten (311). Verweigert der Benutzer die Bestätigung oder lehnt diese ab (313), wird durch das Positionserfassungssystem eine neue Position bestimmt (301). Dieser Vorgang wird solange ausgeführt, bis die die aktuelle Position repräsentierenden Positionsdaten erzeugt wurden (311). Alternativ kann der Benutzer das Verfahren abbrechen.

Die Positionsdaten können die die Position repräsentierende Information, jedoch auch die Zeit des Erfassens der Position und andere die Position betreffende Informationen umfassen.

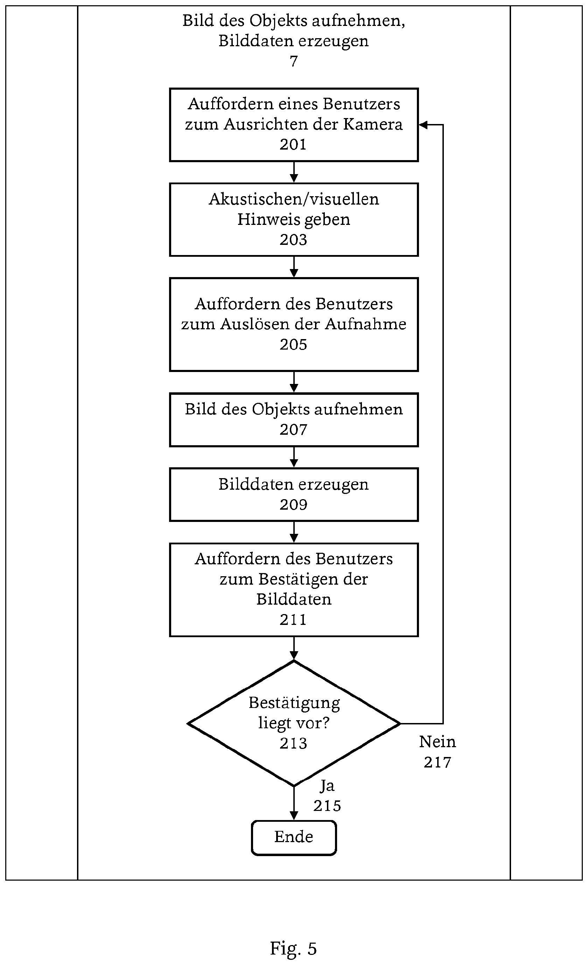

Gemäß Figur 1, veranlasst das Softwaremodul ferner die Kamera, ein Bild des Objekts aufzunehmen und das Bild repräsentierende Bilddaten zu erzeugen (7). Das Bild bzw. die Bilddaten sind für das weitere Verfahren von grundlegender Bedeutung und dienen beispielsweise dem Auftraggeber dazu, einen Teilzustand des Objekts zu bestimmen. Die Bilddaten können Bilder, jedoch auch die jeweiligen Zeitpunkte des Aufnehmens der Bilder, die zuletzt bestimmten Positionsdaten, falls diese vorliegen, und andere das Bild betreffende Informationen umfassen. Eine Ausgestaltung des Schritts des Aufnehmens des Bildes des Objekts und des Erzeugens der Bilddaten (7) ist in Figur 5 beispielhaft erläutert.

Die in Figur 5 dargestellte, beispielhafte Ausgestaltung des Schritts des Aufnehmens des Bildes des Objekts und des Erzeugens der Bilddaten (7) beginnt mit einer Aufforderung zum Ausrichten der Kamera (201) durch das Softwaremodul an einen Benutzer. Diese Aufforderung kann beispielsweise an einen akustischen und/oder visuellen Hinweis gekoppelt sein (203), mit dem der Benutzer darauf hingewiesen wird, die Kamera auszurichten. Ferner kann der Benutzer zum Auslösen der Aufnahme des Bildes des Objekts aufgefordert werden (205). Anschließend nimmt das Softwaremodul das Bild des Objekts auf (207) und das Bild repräsentierende Bilddaten werden erzeugt (209). Da die das Bild repräsentierenden Bilddaten für das weitere Verfahren von grundlegender Bedeutung sind, wird dem Benutzer die Möglichkeit eingeräumt, das eben aufgenommene Bild zu verwerfen und ein weiteres Bild aufzunehmen. Dies geschieht in Form des Aufforderns des Benutzers zum Bestätigen der Bilddaten (211). Es wird geprüft, ob eine Bestätigung vorliegt (213). Bestätigt der Nutzer die Bilddaten (215) ist der Schritt des Aufnehmens des Bildes des Objekts und des Erzeugens der Bilddaten (7) beendet. Bestätigt der Benutzer die Bilddaten nicht oder lehnt dies ab (217), wird der Benutzer erneut zum Ausrichten der Kamera aufgefordert (201). Diese Abfolge wird solange durchgeführt, bis wenigsten ein bestätigtes Bild vorliegt (215). Alternativ kann der Benutzer das Verfahren abbrechen. Das Verfahren kann ferner vorsehen, dass eine beliebige oder vorbestimmte Anzahl von Bildern des Objekts aufzunehmen ist.

Sind die Bilddaten und die Positionsdaten erzeugt, gibt das Softwaremodul gemäß der Ausführungsform in Figur 1 die Bilddaten und die Positionsdaten, beispielsweise über eine Datenschnittstelle, aus (11). Mit der Ausgabe der Bilddaten und Positionsdaten können diese zur Übertragung an den Auftraggeber vorbereitet werden. Mit der Ausgabe der Daten sind die Schritte des Softwaremoduls gemäß der in Figur 1 dargestellten Ausführungsformen beendet. Die ausgegeben Daten können nun beispielsweise über das Internet an den Auftraggeber übermittelt oder auf einem Speichermedium gespeichert werden.

Ferner umfasst das Verfahren (1) ein Empfangen der das Bild repräsentierenden Bilddaten (13) und der die aktuelle Position repräsentierenden Positionsdaten (15) durch den Auftraggeber.

In einem weiteren Schritt bestimmt, gemäß der Ausführungsform in Figur 1, der Auftraggeber aus den Bilddaten und den Positionsdaten einen Zeitschätzwert (17), welcher eine Zeitdauer abschätzt, welche zwischen dem Bestimmen der aktuellen Position und dem Aufnehmen des Bildes vergangen ist. Der Zeitschätzwert ist demgemäß ein Maß für die Zeit, die zwischen der Positionsbestimmung und dem Aufnehmen des Bildes vergangen ist. Als trivialen Zeitschätzwert kann die Zeit, die tatsächlich zwischen dem Bestimmen der aktuellen Position und dem Aufnehmen des Bildes vergangen ist, verwendet werden. Wie nachfolgend beschrieben, kann der Zeitschätzwert jedoch auch anders definiert sein.

Ferner umfasst das Verfahren (1) ein Bestimmen eines Abstandsschätzwerts (19). Der Abstandschätzwert ist ein Schätzwert für einen Abstand zwischen dem aktuellen Standort des Objekts, also dem tatsächlichen Standort des Objekts, und einer Soll-Position des Objekts. Die Soll-Position kann eine Position sein, an dem der Auftraggeber das Objekt vermutet oder erwartet. Der Abstandsschätzwert ist demgemäß ein Maß für die Distanz zwischen dem tatsächlichen Standort des Objekts und der Soll-Position des Objekts.

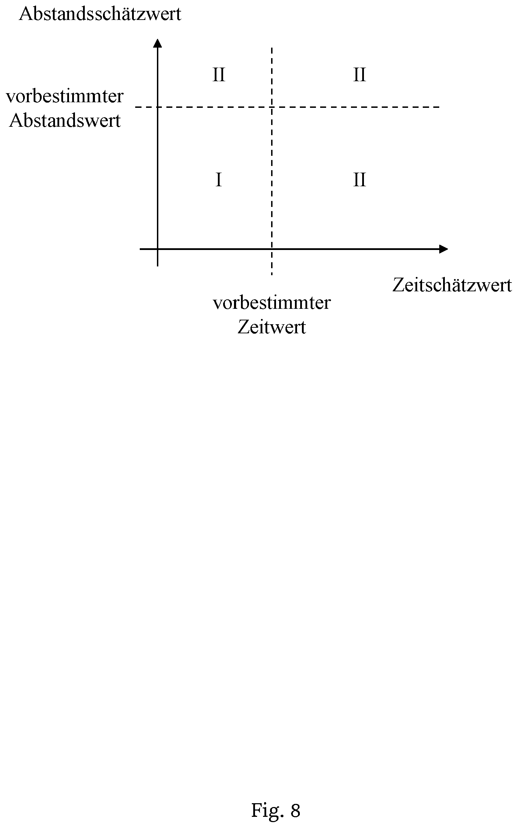

In Abhängigkeit des bestimmten Abstandschätzwerts und des bestimmten Zeitschätzwerts, welche in der in Figur 1 dargestellten Ausführungsform durch den Auftraggeber bestimmt wurden, bestimmt der Auftraggeber ferner einen ersten Teilzustand des Objekts (21). Der erste Teilzustand definiert ein Maß, mit dem der Auftraggeber den Zeitschätzwert und den Abstandsschätzwert beurteilen kann. Beispielsweise kann der erste Teilzustand des Objekts durch einen Funktionswert einer Funktion repräsentiert sein, wobei die Funktion den bestimmten Abstandsschätzwert und/oder den bestimmten Zeitschätzwert als Argumente verwendet. In die Funktion können weitere Parameter, beispielsweise Gewichtungen des Abstandsschätzwerts und des Zeitschätzwerts, einfließen. Die Funktion kann beispielweise als Funktionswerte die Werte einer Skala aufweisen, mit der der Abstandsschätzwert und der Zeitschätzwert zueinander in Relation gesetzt werden. Alternativ kann der erste Teilzustand danach bemessen sein, ob der Zeitschätzwert kleiner als ein vorbestimmter Zeitwert ist und der Abstandsschätzwert kleiner als ein vorbestimmter Abstandswert ist, so wie dies beispielhaft in Figur 8 dargestellt ist.

Figur 8 zeigt in einem aus dem Zeitschätzwert und dem Abstandsschätzwert aufgespanntem Diagramm einen Bereich eines ersten Ergebnisses, welcher durch "I" dargestellt ist, und Bereiche eines zweiten Ergebnisses, welche durch "II" dargestellt sind. Das erste bzw. das zweite Ergebnis können den ersten Teilzustand des Objekts repräsentieren. Das erste Ergebnis liegt vor, wenn der bestimmte Zeitschätzwert kleiner als ein vorbestimmter Zeitwert ist und wenn der Abstandsschätzwert kleiner als ein vorbestimmter Abstandswert ist.

In dem Bereich des ersten Ergebnisses kann, bei entsprechender Bemaßung des vorbestimmten Abstandswerts und des vorbestimmten Zeitwerts, angenommen werden, dass der tatsächliche Standort des Objekts in der Nähe der Soll-Position liegt und das Aufnehmen des Bildes und das Bestimmen der Position zueinander zeitnah erfolgten. Die Bereiche des zweiten Ergebnisses sind Bereiche in denen dies nicht angenommen werden kann und daher könnte es sein, dass beispielsweise zwischen dem Aufnehmen des Bildes und der Bestimmung der Position eine relativ große Zeitspanne verstrichen ist und/oder der tatsächliche Standort des Objekts von der Soll-Position relativ weit entfernt ist.

Alternativ kann der erste Teilzustand des Objekts durch einen Funktionswert einer Funktion repräsentiert sein, wobei die Funktion ein einziges Argument aufweist und das Argument von dem bestimmten Abstandswert und dem bestimmten Zeitschätzwert abhängig ist.

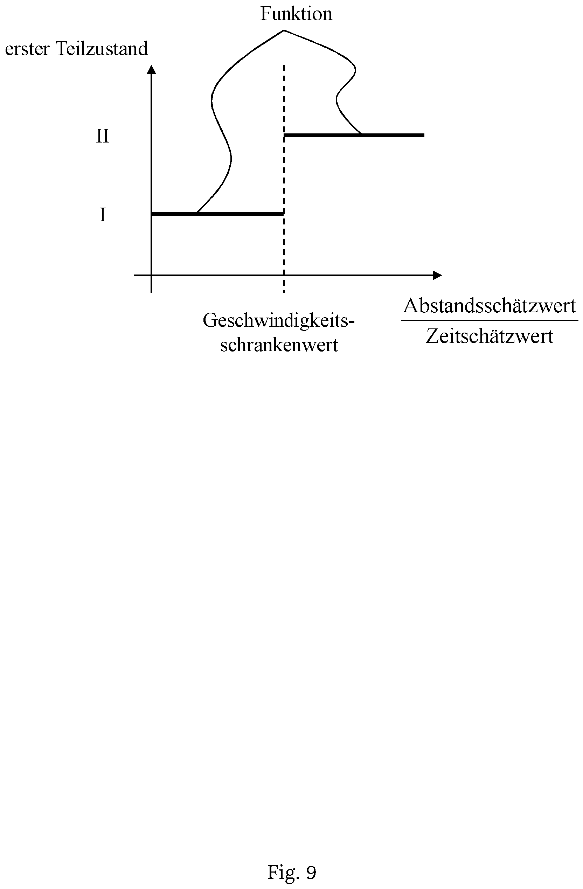

Figur 9 zeigt eine beispielhafte Ausgestaltung einer solchen Funktion. Der erste Teilzustand wird demnach durch einen Vergleich eines Quotienten aus dem Abstandsschätzwert im Zähler und dem Zeitschätzwert im Nenner mit einem Geschwindigkeitsschrankenwert gebildet. Der erste Teilzustand kann demnach ein erstes Ergebnis "I" oder einen ersten Wertebereich aufweisen, wenn der Wert des Quotienten kleiner als der Geschwindigkeitsschrankenwert ist und ein zweites Ergebnis "II" oder einen zweiten Wertebereich aufweisen, wenn der Wert des Quotienten größer als der Geschwindigkeitsschrankenwert ist. Eine solche Bestimmung des ersten Teilzustands des Objekts ist beispielsweise dann sinnvoll, wenn an dem tatsächlichen Standort des Objekts eine Positionsbestimmung unmöglich ist. In einem solchen Fall kann es erforderlich sein, dass die Position an einem Ort bestimmt wird, der von dem Objekt verhältnismäßig weit entfernt ist. Eine derart bestimmte Position soll jedoch dann als eine valide Position anerkannt werden, wenn die Zeit, die zwischen der Bestimmung der Position und dem Aufnehmen des Bildes verstreicht, nicht zu groß ist. Der Quotient aus dem Abstandsschätzwert und dem Zeitschätzwert kann daher als ein sinnvolles Maß zur Bestimmung des ersten Teilzustands verwendet werden.

Die in Figur 1 dargestellte Ausführungsform des Verfahrens (1) umfasst ferner ein Bestimmen eines zweiten Teilzustands des Objekts (23). Dies kann bevorzugt von dem Auftraggeber durchgeführt werden. Der zweite Teilzustand kann auf einer Analyse des durch die Bilddaten repräsentierten Bildes bestimmbar sein, so wie dies beispielhaft durch einen Pfeil 25 und insbesondere davon abhängig sein, ob das Objekt, welches auf dem Bild sichtbar ist, eine vorbestimmte Beschaffenheit aufweist, die bevorzugt von dem Auftraggeber definiert ist. Auf diese Weise können Eigenschaften des Objekts in den Zustand des Objekts einfließen, die sich gegebenenfalls nicht anhand von physikalischen Größeren quantifizieren lassen.

Schließlich umfasst das Verfahren (1) ein Klassifizieren des Zustands des Objekts (27) basierend auf wenigstens dem ersten Teilzustand des Objekts. In der in Figur 1 gezeigten Ausführungsform des Verfahrens basiert das Klassifizieren des Zustands ferner auf dem zweiten Teilzustand des Objekts. Das Klassifizieren des Zustands des Objekts (27) wird bevorzugt durch den Auftraggeber ausgeführt. Mit dem Klassifizieren des Zustands (27) ist der Zustand des Objekts erfasst.

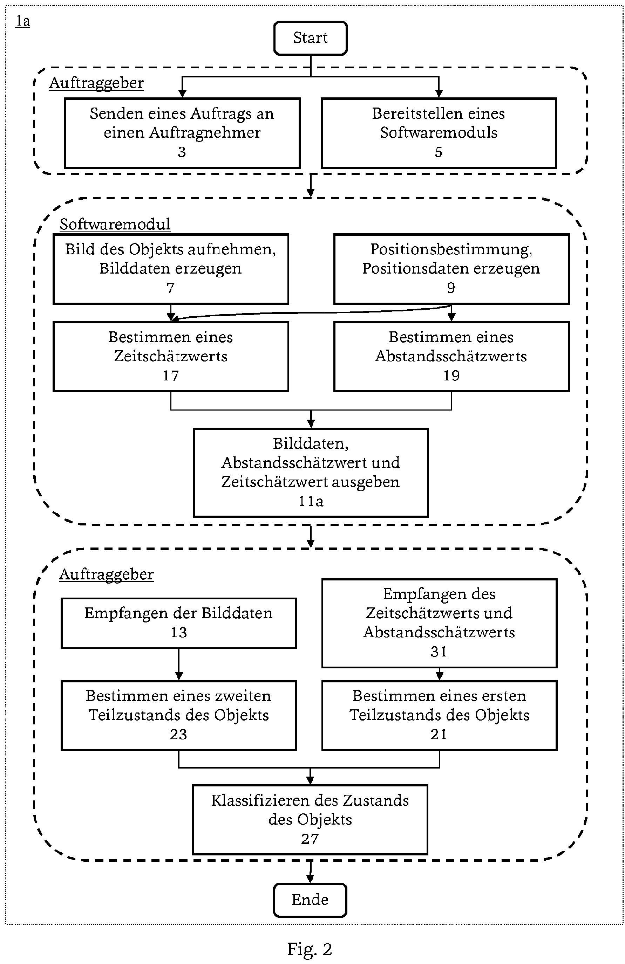

Figur 2 zeigt eine weitere Ausführungsform eines Verfahrens (1a) zum Erfassen eines Zustands eines Objekts. Diese Ausführungsform umfasst einige Schritte, die bereits in Zusammenhang mit der in Figur 1 dargestellten Ausführungsform erläutert wurden. Für die nun beschriebene Ausführungsform gelten die zuvor beschriebenen Erläuterungen demgemäß gleichermaßen und werden daher nicht erneut im Detail erläutert.

Die Ausführungsform umfasst ein Senden eines Auftrags an einen Auftragnehmer (3) und ein Bereitstellen eines Softwaremoduls (5) durch einen Auftraggeber sowie ein Aufnehmen eines Bildes des Objekts und ein Erzeugen von das Bild repräsentierenden Bilddaten (7) sowie eine Bestimmung einer aktuellen Position des mobilen Datenerfassungsgeräts und eine Erzeugung von die aktuelle Position repräsentierenden Positionsdaten durch das Softwaremodul (9). Im Gegensatz zu der in Figur 1 dargestellten Ausführungsform führt nun das Softwaremodul die Schritte des Bestimmens eines Zeitschätzwerts (17) und des Bestimmens eines Abstandsschätzwerts (19) durch. Da zum Bestimmen eines ersten Teilzustands des Objekts (21) der Zeitschätzwert und der Abstandsschätzwert ausreichend sind, ist es ausreichend, dass das Softwaremodul die Bilddaten, den bestimmten Abstandsschätzwert und den bestimmten Zeitschätzwert ausgibt (11a). Alternativ kann das Softwaremodul weitere Daten, wie beispielsweise die Positionsdaten, ausgeben.

Ferner umfasst das Verfahren (1a) ein Empfangen der Bilddaten (13) sowie des bestimmten Zeitschätzwerts und des bestimmten Abstandsschätzwerts (31). Wie bereits im Zusammenhang mit der in Figur 1 gezeigten Ausführungsform erläutert, bestimmt der Auftraggeber den ersten Teilzustand des Objekts in Abhängigkeit von dem bestimmten Zeitschätzwert und dem bestimmten Abstandschätzwert. Analog dazu bestimmt der Auftraggeber einen zweiten Teilzustand des Objekts (23) und schließlich klassifiziert der Auftraggeber den Zustand des Objekts (27) basierend auf dem ersten Teilzustand und dem zweiten Teilzustand des Objekts.

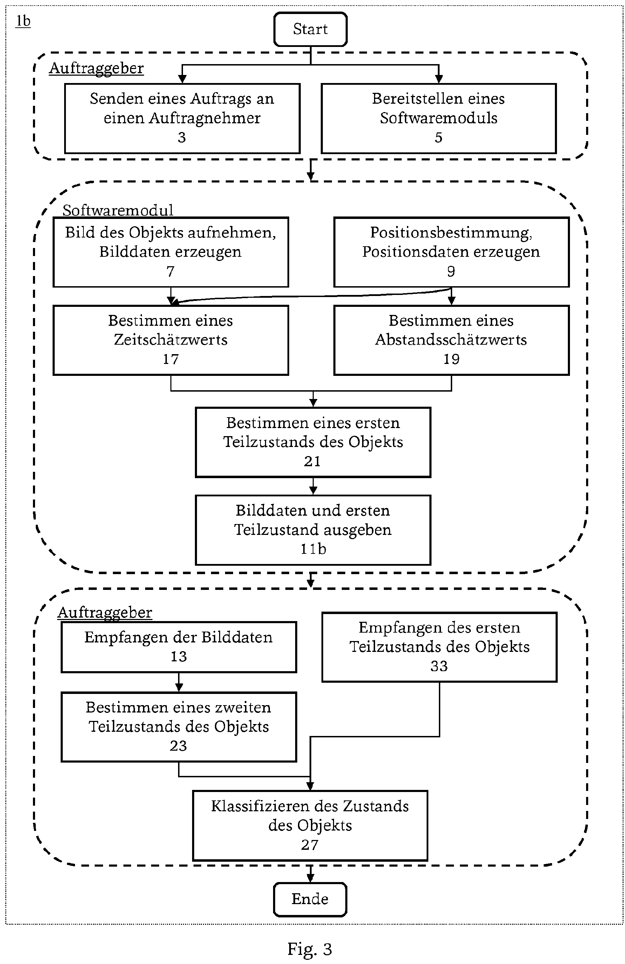

Figur 3 zeigt eine weitere Ausführungsform eines Verfahrens (1b) zum Erfassen eines Zustands eines Objekts. Diese Ausführungsform umfasst einige Schritte, die bereits im Zusammenhang mit den in Figur 1 und Figur 2 dargestellten Ausführungsformen erläutert wurden. Auf die Ausführungen zu diesen Schritten wird daher Bezug genommen und diese im Einzelnen nicht erneut im Detail erläutert.

Das Verfahren (1b) umfasst ein Senden eines Auftrags an ein Auftraggeber (3) und ein Bereitstellen eines Softwaremoduls (5) durch den Auftraggeber sowie ein Aufnehmen eines Bildes des Objekts und ein Erzeugen von das Bild repräsentierenden Bilddaten (7), ein Bestimmen einer aktuellen Position des mobilen Datenerfassungsgeräts und ein Erzeugen von die aktuelle Position repräsentierende Positionsdaten (9) durch das Softwaremodul. Ferner umfasst das Verfahren (1b) ein Bestimmen eines Zeitschätzwerts (17) und ein Bestimmen eines Abstandsschätzwerts (19) durch das Softwaremodul analog zu der in Figur 2 dargestellten Ausführungsform des Verfahrens (1a). Im Gegensatz zu den bisher erläuterten Ausführungsformen des Verfahrens umfasst diese Ausführungsform ein Bestimmen eines ersten Teilzustands des Objekts (21) durch das Softwaremodul. Da zum Klassifizieren des Zustands des Objekts (27) der erste Teilzustand des Objekts ausreichend ist, ist es ausreichend, dass das Softwaremodul die Bilddaten und den ersten Teilzustand des Objekts ausgibt (33). Alternativ kann das Softwaremodul weitere Informationen, wie beispielsweise den bestimmten Zeitschätzwert und/oder den bestimmten Abstandsschätzwert und/oder die Positionsdaten ausgeben.

Gemäß der in Figur 3 dargestellten Ausführungsformen umfasst das Verfahren (1b) ferner ein Empfangen der Bilddaten (13) und ein Empfangen des ersten Teilzustands (33) des Objekts durch den Auftraggeber. Wie in den zuvor erläuterten Ausführungsformen bestimmt der Auftraggeber den zweiten Teilzustand des Objekts (23) basierend auf den Bilddaten. Auf dem empfangenen ersten Teilzustand des Objekts und dem bestimmten zweiten Teilzustand des Objekts basierend klassifiziert der Auftraggeber den Zustand des Objekts (27). Mit dem Klassifizieren des Zustands des Objekts ist der Zustand des Objekts erfasst.

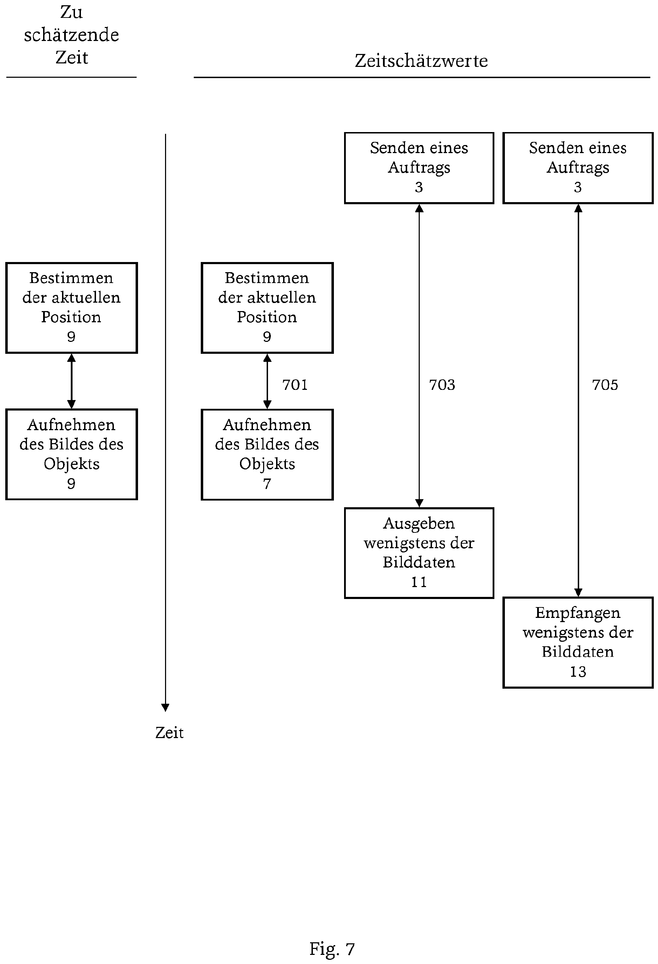

In den zuvor erläuterten Ausführungsformen des Verfahrens konnte als Zeitschätzwert eine Zeitdauer (701) verwendet werden, welche zwischen dem Bestimmen der aktuellen Position und dem Aufnehmen des Bildes verstreicht (siehe Figur 7). In diesem Fall ist der erste Teilzustand des Objekts von denjenigen Zeitdauern und Schritten des Verfahrens unabhängig, welche vor dem Bestimmen der aktuellen Position und nach dem Aufnehmen des Bildes des Objekts liegen. In solchen Ausführungsformen wirkt sich daher ein Senden eines Auftrags an einen Auftragnehmer, ein Bereitstellen eines Softwaremoduls, ein Auffordern zum Beschaffen und Beziehen einer Bezeichnung des Objekts und/oder des Softwaremoduls und ein Installieren des Softwaremoduls nicht auf den Zeitschätzwert und insbesondere nicht auf den ersten Teilzustand des Objekts aus. In solchen Ausführungsformen wirkt sich ferner das Ausgeben wenigstens der Bilddaten und das Empfangen wenigstens der Bilddaten nicht auf den ersten Zeitschätzwert aus. Die zur Bestimmung des ersten Teilzustands des Objekts einzig relevante Zeit ist die Zeitdauer (701), welche zwischen dem Bestimmen der aktuellen Position und dem Aufnehmen des Bildes verstreicht, wobei die Reihenfolge der beiden Schritte irrelevant ist.

In einer weiteren Ausführungsform eines Verfahrens zum Verfassen eines Zustands eines Objekts, welche im Wesentlichen auf den im Zusammenhang mit den Figuren 1 bis 3 erläuterten Ausführungsformen basiert, wird als der Zeitschätzwert eine Zeitdauer (703) bestimmt, welche zwischen dem Senden des Auftrags und dem Ausgeben wenigstens der Bilddaten verstreicht, so wie dies in Figur 7 gezeigt ist. Demgemäß ist der Zeitschätzwert von allen Zeitdauern, die zur Ausführung der Schritte zwischen dem Senden eines Auftrags und dem Ausgeben wenigstens der Bilddaten benötigt wird, abhängig. Eine solche Ausführungsform ist beispielsweise in den Fällen anwendbar, in denen zwischen dem Ausgeben wenigstens der Bilddaten und dem Empfangen wenigstens der Bilddaten eine verhältnismäßig lange Zeit verstreicht, beispielsweise dadurch, dass wenigstens die Bilddaten auf einen Datenspeicher insbesondere ein optisches oder magnetisches Speichermedium ausgegeben werden und der Datenspeicher beispielsweise postalisch an den Auftraggeber versendet wird. Zudem ist es in dieser Ausführungsform nicht erforderlich, dass der Zeitpunkt des Bestimmens der aktuellen Position und der Zeitpunkt des Aufnehmens des Bildes des Objekts bekannt sein müssen. Das Softwaremodul oder der Auftragnehmer können den Zeitschätzwert bestimmen, indem die Zeitpunkte des Sendens des Auftrags und des Ausgebens wenigstens der Bilddaten bestimmt werden.

Eine weitere Ausführungsform eines Verfahrens zum Erfassen eines Zustands eines Objekts basiert auf den zuvor im Zusammenhang mit den Figuren 1 bis 3 erläuterten Ausführungsformen des Verfahrens und unterscheidet sich von diesen dadurch, dass als Zeitschätzwert eine Zeitdauer (705) bestimmt wird, welche zwischen dem Senden des Auftrags und dem Empfangen wenigstens der Bilddaten verstreicht, so wie dies in Figur 7 dargestellt ist. In dieser Ausführungsform ist der Zeitschätzwert von all denjenigen Zeitdauern abhängig, die zur Durchführung der Schritte zwischen dem Senden des Auftrags und dem Empfangen wenigstens der Bilddaten benötigt werden. In dieser Ausführungsform kann allein der Auftraggeber den Zeitschätzwert bestimmen. Die Zeitpunkte des Bestimmens der aktuellen Position, des Aufnehmens der Bilder des Objekts und des Ausgebens wenigstens der Bilddaten müssen daher nicht bekannt sein.

Ein in Zusammenhang mit den obigen Ausführungsformen bezeichneter Auftragnehmer kann zum einen der gegenwärtige Besitzer des Objekts zum anderen aber auch eine mit der Durchführung der Erfassung des Objekts betraute Person sein. Beispielsweise kann ein Paketzusteller unter Verwendung eines mobilen Paketzustellungsgeräts, ein Mitarbeiter unter Verwendung eines Smart-Phones oder dergleichen Auftragnehmer im Sinne der Ausführungsformen sein.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Obwohl die voranstehenden Ausführungsbeispiele der vorliegenden Erfindung lediglich beispielhaft erläutert worden sind, werden die Fachleute erkennen, dass zahlreiche Modifikationen, Hinzufügungen und Ersetzungen möglich sind, ohne von dem Schutzbereich und Geist der in den nachfolgenden Ansprüchen offenbarten Erfindung abzuweichen.

Einige Beispiele möglicher Ausführungsformen der Erfindung sind nachfolgend knapp zusammengefasst.

Beispiel 1: Verfahren (1) zum Erfassen eines Zustands eines Objekts, umfassend:
Senden eines Auftrags an einen Auftragnehmer (3) durch einen Auftraggeber;
Bereitstellen eines Softwaremoduls (5), welches, wenn es auf einem mobilen Datenerfassungsgerät, welches wenigstens eine Kamera und ein Positionserfassungssystem umfasst, ausgeführt wird,
   - das Positionserfassungssystem veranlasst, eine aktuelle Position des mobilen Datenerfassungsgeräts zu bestimmen und die aktuelle Position repräsentierende Positionsdaten zu erzeugen (9),
   - die Kamera veranlasst, ein Bild des Objekts aufzunehmen und das Bild repräsentierende Bilddaten zu erzeugen (7), und
   - wenigstens die Bilddaten ausgibt (11);
Empfangen wenigstens der ausgegebenen Bilddaten durch den Auftraggeber (13);
Bestimmen eines Zeitschätzwertes (17) für eine Zeitdauer, welche zwischen dem Bestimmen der aktuellen Position und dem Aufnehmen des Bildes vergangen ist;
Bestimmen eines Abstandsschätzwertes (19) für einen Abstand zwischen dem aktuellen Standort des Objekts und einer Soll-Position des Objekts;
Bestimmen eines ersten Teilzustands des Objekts (21) in Abhängigkeit von dem bestimmten Abstandsschätzwert und dem bestimmten Zeitschätzwert, und
Klassifizieren des Zustands des Objekts (27) basierend auf dem ersten Teilzustand.

Beispiel 2: Verfahren nach Beispiel 1, wobei der erste Teilzustand des Objekts durch einen Funktionswert einer Funktion mit dem bestimmten Abstandsschätzwert und/oder dem bestimmten Zeitschätzwert als Argumenten repräsentiert ist.

Beispiel 3: Verfahren nach Beispiel 1 oder 2, wobei der erste Teilzustand des Objekts ein erstes Ergebnis (I) aufweist, wenn der Zeitschätzwert kleiner als ein vorbestimmter Zeitwert ist und wenn der Abstandsschätzwert kleiner als ein vorbestimmter Abstandswert ist; und ein zweites Ergebnis (II) aufweist, wenn der Zeitschätzwert nicht kleiner als ein vorbestimmter Zeitwert ist und/oder wenn der Abstandsschätzwert nicht kleiner als ein vorbestimmter Abstandswert ist.

Beispiel 4: Verfahren nach Beispiel 3, wobei der vorbestimmte Zeitwert kleiner als 5 Stunden, kleiner als 3 Stunden, kleiner als 1 Stunde, kleiner als 30 Minuten oder kleiner als 15 Minuten ist.

Beispiel 5: Verfahren nach Beispiel 3 oder 4, wobei der vorbestimmte Abstandswert kleiner als 10 km, kleiner als 5 km, kleiner als 2 km, kleiner als 1 km, kleiner als 500 m, kleiner als 200 m, kleiner als 100 m oder kleiner als 50 m ist.

Beispiel 6: Verfahren nach einem der Beispiele 1 bis 5, wobei der erste Teilzustand des Objekts durch einen Funktionswert einer Funktion mit einem einzigen Argument repräsentiert ist, wobei das Argument von dem bestimmten Abstandsschätzwert und dem bestimmten Zeitschätzwert abhängig ist.

Beispiel 7: Verfahren nach Beispiel 6, wobei die Funktion prüft, ob ein Quotient aus dem Abstandsschätzwert im Zähler und dem Zeitschätzwert im Nenner kleiner oder gleich einem Geschwindigkeitsschrankenwert ist, welcher kleiner als 200 km/h, kleiner als 100 km/h, kleiner als 75 km/h, kleiner als 50 km/h, kleiner als 30 km/h, kleiner als 10km/k oder kleiner als 5km/h ist.

Beispiel 8: Verfahren nach einem der Beispiele 1 bis 7, wobei das Klassifizieren des Zustands des Objekts (27) ferner auf einem zweiten Teilzustand des Objekts basiert, welcher durch eine Analyse des Bildes bestimmbar ist, und insbesondere davon abhängig ist, ob das Objekt eine definierte Beschaffenheit aufweist.

Beispiel 9: Verfahren nach Beispiel 8, wobei der Auftraggeber den zweiten Teilzustand bestimmt.

Beispiel 10: Verfahren nach einem der Beispiele 1 bis 9, wobei eine Zeitdauer (705), welche zwischen dem Senden des Auftrags (3) und dem Empfangen wenigstens der Bilddaten (13) verstreicht, als der Zeitschätzwert bestimmt wird.

Beispiel 11: Verfahren nach einem der Beispiele 1 bis 9, wobei eine Zeitdauer (703), welche zwischen dem Senden des Auftrags (3) und dem Ausgeben wenigstens der Bilddaten (11) verstreicht, als der Zeitschätzwert bestimmt wird.

Beispiel 12: Verfahren nach einem der Beispiele 1 bis 9, wobei eine Zeitdauer (701), welche zwischen dem Bestimmen der aktuellen Position (9) und dem Aufnehmen des Bildes (7) verstreicht, als der Zeitschätzwert bestimmt wird.

Beispiel 13: Verfahren nach einem der Beispiele 1 bis 12, wobei ein Abstand, welcher auf der durch die Positionsdaten repräsentierten aktuellen Position und der Soll-Position des Objekts basiert, als der Abstandsschätzwert bestimmt wird.

Beispiel 14: Verfahren nach einem der Beispiele 1 bis 13, wobei der Auftrag eine Aufforderung zum Beschaffen des Softwaremoduls (101) und/oder eine Aufforderung zum Beschaffen einer Bezeichnung des Objekts (103) umfasst.

Beispiel 15: Verfahren nach Beispiel 1 bis 14, ferner umfassend ein Beschaffen des Softwaremoduls (107), wobei das Beschaffen des Softwaremoduls insbesondere durch
- Anmelden an einem Server des Auftraggebers und Beziehen des Softwaremoduls von dem Server des Auftraggebers erfolgt, oder
- Beziehen des Softwaremoduls von einer Internetplattform oder einem Speichermedium erfolgt.

Beispiel 16: Verfahren nach einem der Beispiele 1 bis 15, ferner umfassend ein Beschaffen einer Bezeichnung des Objekts (105), wobei das Beschaffen einer Bezeichnung des Objekts insbesondere durch Anmelden an einem Server des Auftraggebers und Beziehen einer Bezeichnung des Objekts von dem Server des Auftraggebers erfolgt.

Beispiel 17: Verfahren nach einem der Beispiele 1 bis 16, wobei der Auftrag das Softwaremodul und eine Bezeichnung des Objekts umfasst.

Beispiel 18: Verfahren nach einem der Beispiele 1 bis 17, ferner umfassend ein Installieren des Softwaremoduls (109) auf dem mobilen Datenerfassungsgerät.

Beispiel 19: Verfahren nach einem der Beispiele 1 bis 18, ferner umfassend: Bereitstellen des mobilen Datenerfassungsgeräts durch den Auftraggeber an den Auftragnehmer.

Beispiel 20: Verfahren nach einem der Beispiele 1 bis 19, wobei das Softwaremodul dazu konfiguriert ist, ab dem Senden des Auftrags nur für eine vorbestimmte Dauer wenigstens die Bilddaten auszugeben und insbesondere ausführbar zu sein.

Beispiel 21: Verfahren nach einem der Beispiele 1 bis 20, wobei ein Server des Auftraggebers dazu konfiguriert ist, das Empfangen wenigstens der Bilddaten ab dem Senden des Auftrags nur während einer vorbestimmten Dauer durchzuführen.

Beispiel 22: Verfahren nach Beispiel 20 oder 21, wobei die vorbestimmte Dauer kleiner als 14 Tage, kleine als 7 Tage, kleiner als 3 Tage, kleiner als 1 Tag, kleiner als 12 Stunden, kleiner als 6 Stunden oder kleiner als 1 Stunde ist.

Beispiel 23: Verfahren nach einem der Beispiele 1 bis 22, wobei der Auftraggeber den Zeitschätzwert und/oder den Abstandsschätzwert und/oder den ersten Teilzustand bestimmt und/oder den Zustand des Objekts klassifiziert.

Beispiel 24: Verfahren nach einem der Beispiele 1 bis 23, wobei das Softwaremodul den Zeitschätzwert und/oder den Abstandsschätzwert und/oder den ersten Teilzustand bestimmt.

Beispiel 25: Verfahren nach einem der Beispiele 1 bis 24, wobei das Ausgeben wenigstens der Bilddaten ferner ein Ausgeben der Positionsdaten und/oder des Zeitschätzwerts und/oder des Abstandsschätzwerts und/oder des ersten Teilzustands umfasst.

Beispiel 26: Verfahren nach einem der Beispiele 1 bis 25, wobei das Ausgeben wenigstens der Bilddaten ein Ausgeben auf einen Datenspeicher, insbesondere ein optisches oder magnetisches Speichermedium, umfasst.

Beispiel 27: Verfahren nach einem der Beispiele 1 bis 26, ferner umfassend Senden der ausgegebenen Bilddaten und/oder der ausgegebenen Positionsdaten und/oder des ausgegebenen Zeitschätzwerts und/oder des ausgegebenen Abstandsschätzwerts und/oder des ausgegebenen ersten Teilzustands durch den Auftragnehmer an den Auftraggeber.

Beispiel 28: Verfahren nach einem der Beispiele 1 bis 27, wobei das Empfangen wenigstens der Bilddaten (13) ferner ein Empfangen der ausgegebenen Positionsdaten und/oder des ausgegebenen Zeitschätzwerts und/oder des ausgegebenen Abstandsschätzwerts und/oder des ausgegebenen ersten Teilzustands umfasst und/oder wobei das Empfangen wenigstens der Bilddaten insbesondere ein Auslesen eines Datenspeichers umfasst.

Beispiel 29: Verfahren nach einem der Beispiele 1 bis 28, wobei das Senden des Auftrags durch eine SMS, eine E-Mail oder eine andere elektronische Nachricht erfolgt.

Beispiel 30: Verfahren zum Erfassen eines Zustands eine Objekts, wobei ein Softwaremodul
ein Positionserfassungssystem eines mobilen Datenerfassungsgeräts veranlasst, eine aktuelle Position des mobilen Datenerfassungsgeräts zu bestimmen und die aktuelle Position repräsentierende Positionsdaten zu erzeugen (9),
eine Kamera des mobilen Datenerfassungsgeräts veranlasst, ein Bild des Objekts aufzunehmen und das Bild repräsentierende Bilddaten zu erzeugen (7),
wenigstens die Bilddaten (11) ausgibt,
einen Zeitschätzwert für eine Zeitdauer bestimmt (17), welche zwischen dem Bestimmen der aktuellen Position und dem Aufnehmen des Bildes vergangen ist.

Beispiel 31: Verfahren nach Beispiel 30, wobei das Softwaremodul ferner
einen Abstandsschätzwert für einen Abstand zwischen dem aktuellen Standort des Objekts und einer Soll-Position des Objekts bestimmt (19).

Beispiel 32: Verfahren nach Beispiel 31, wobei das Softwaremodul ferner
einen ersten Teilzustand des Objekts in Abhängigkeit von dem bestimmten Abstandsschätzwert und dem bestimmten Zeitschätzwert bestimmt (21).

Beispiel 33: Verfahren nach Beispiel 32, wobei das Softwaremodul ferner
den Zustand des Objekts basierend auf dem ersten Teilzustand klassifiziert (27).

Beispiel 34: Verfahren nach Beispiel 32 oder 33, wobei der erste Teilzustand des Objekts durch einen Funktionswert einer Funktion mit dem bestimmten Abstandsschätzwert und/oder dem bestimmten Zeitschätzwert als Argumenten repräsentiert ist.

Beispiel 35: Verfahren nach einem der Beispiele 32 bis 34, wobei der erste Teilzustand des Objekts ein erstes Ergebnis (I) aufweist, wenn der Zeitschätzwert kleiner als ein vorbestimmter Zeitwert ist und wenn der Abstandsschätzwert kleiner als ein vorbestimmter Abstandswert ist; und ein zweites Ergebnis (II) aufweist, wenn der Zeitschätzwert nicht kleiner als ein vorbestimmter Zeitwert ist und/oder wenn der Abstandsschätzwert nicht kleiner als ein vorbestimmter Abstandswert ist.

Beispiel 36: Verfahren nach Beispiel 35, wobei der vorbestimmte Zeitwert kleiner als 5 Stunden, kleiner als 3 Stunden, kleiner als 1 Stunde, kleiner als 30 Minuten oder kleiner als 15 Minuten ist.

Beispiel 37: Verfahren nach Beispiel 35 oder 36, wobei der vorbestimmte Abstandswert kleiner als 10 km, kleiner als 5 km, kleiner als 2 km, kleiner als 1 km, kleiner als 500 m, kleiner als 200 m, kleiner als 100 m oder kleiner als 50 m ist.

Beispiel 38: Verfahren nach einem der Beispiele 32 bis 37, wobei der erste Teilzustand des Objekts durch einen Funktionswert einer Funktion mit einem einzigen Argument repräsentiert ist, wobei das Argument von dem bestimmten Abstandsschätzwert und dem bestimmten Zeitschätzwert abhängig ist.

Beispiel 39: Verfahren nach Beispiel 38, wobei die Funktion prüft, ob ein Quotient aus dem Abstandsschätzwert im Zähler und dem Zeitschätzwert im Nenner kleiner oder gleich einem Geschwindigkeitsschrankenwert ist, welcher kleiner als 200 km/h, kleiner als 100 km/h, kleiner als 75 km/h, kleiner als 50 km/h, kleiner als 30 km/h, kleiner als 10km/k oder kleiner als 5km/h ist.

Beispiel 40: Verfahren nach einem der Beispiele 30 bis 39, wobei eine Zeitdauer (701), welche zwischen dem Bestimmen der aktuellen Position (9) und dem Aufnehmen des Bildes (7) verstreicht, als der Zeitschätzwert bestimmt wird.

Beispiel 41: Verfahren nach einem der Beispiele 30 bis 40, wobei ein Abstand, welcher auf der durch die Positionsdaten repräsentierten aktuellen Position und der Soll-Position des Objekts basiert, als der Abstandsschätzwert bestimmt wird.

Beispiel 42: Verfahren nach einem der Beispiele 30 bis 41, wobei das Softwaremodul ferner einen Benutzer des Softwaremoduls auffordert, eine Bezeichnung des Objekts (105) zu beschaffen, wobei das Beschaffen einer Bezeichnung des Objekts insbesondere durch Anmelden an einem Server des Auftraggebers und Beziehen einer Bezeichnung des Objekts von dem Server des Auftraggebers erfolgt.

Beispiel 43: Verfahren nach einem der Beispiele 30 bis 42, wobei das Softwaremodul dazu konfiguriert ist, ab nur für eine vorbestimmte Dauer ausführbar zu sein, welche insbesondere mit einem Installieren des Softwaremoduls auf dem mobilen Datenerfassungsgerät, dem Ausführen des Softwaremoduls auf dem mobilen Datenerfassungsgerät oder dem Bestimmen der aktuellen Position des mobilen Datenerfassungsgeräts beginnt.

Beispiel 44: Verfahren nach Beispiel 43, wobei die vorbestimmte Dauer kleiner als 14 Tage, kleine als 7 Tage, kleiner als 3 Tage, kleiner als 1 Tag, kleiner als 12 Stunden, kleiner als 6 Stunden oder kleiner als 1 Stunde ist.

Beispiel 45: Verfahren nach einem der Beispiele 30 bis 44, wobei das Ausgeben wenigstens der Bilddaten ferner ein Ausgeben der Positionsdaten und/oder des Zeitschätzwerts und/oder des Abstandsschätzwerts und/oder des ersten Teilzustands umfasst.

Beispiel 46: Verfahren nach einem der Beispiele 30 bis 45, wobei das Ausgeben wenigstens der Bilddaten ein Ausgeben auf einen Datenspeicher, insbesondere ein optisches oder magnetisches Speichermedium, umfasst.

Beispiel 47: Verfahren nach einem der Beispiele 30 bis 46, wobei das Softwaremodul ferner ausgegebene Daten an den Auftraggeber sendet.

Beispiel 48: Verfahren nach einem der voranstehenden Beispiele, wobei das Softwaremodul die Kamera veranlasst, ein Bild des Objekts aufzunehmen und das Bild repräsentierende Bilddaten zu erzeugen (7), nachdem die aktuelle Position des mobilen Datenerfassungsgeräts bestimmt ist und/oder die aktuelle Position repräsentierende Positionsdaten erzeugt wurden (9).

Beispiel 49: Verfahren nach einem der voranstehenden Beispiele, wobei das Softwaremodul ferner eines Benutzers des mobilen Datenerfassungsgeräts zum Ausrichten der Kamera auf das Objekt (201) und zum Auslösen der Aufnahme des Bildes des Objekts (205) auffordert.

Beispiel 50: Verfahren nach einem der voranstehenden Beispiele, wobei das Softwaremodul einen Benutzer des mobilen Datenerfassungsgeräts zum Bestätigen der bestimmten, aktuellen Position des mobilen Datenerfassungsgeräts auffordert (303) und wartet, bis eine Eingabe auf die Aufforderung vorliegt, wobei insbesondere die die aktuelle Position repräsentierende Positionsdaten erst erzeugt werden (311), wenn die Bestätigung vorliegt (309).

Beispiel 51: Verfahren nach Beispiel 49 oder 50, wobei das Auffordern des Benutzers des mobilen Datenerfassungsgeräts einen akustischen Hinweis und/oder einen auf einer Anzeige des mobilen Datenerfassungsgeräts angezeigten visuellen Hinweis (203, 305) umfasst.

Beispiel 52: Verfahren nach einem der voranstehenden Beispiele, wobei das Positionserfassungssystem die Position des mobilen Datenerfassungsgeräts mittels eines globalen Navigationssatellitensystems und/oder eines Mobilfunksystems bestimmt.

Beispiel 53: Verfahren nach einem der voranstehenden Beispiele, wobei das mobile Datenerfassungsgerät ein Tablet-PC, ein Mobiltelefon, eine Brille, Uhr oder dergleichen, die eine elektronische Datenverarbeitung bereitstellen, oder ein anderes Computer-ähnliches Gerät ist.

Beispiel 54: Computerlesbares Trägermedium, das Informationen enthält, die ein Computerprogramm verkörpern, das geeignet ist, einen Prozessor eines Datenerfassungsgeräts zu veranlassen, einen Verfahren gemäß einem der Beispiele 30 bis 53 auszuführen.

## Patentansprüche

1. Verfahren (1) zum Erfassen eines Zustands eines Objekts, umfassend:
Senden eines Auftrags, welcher eine Aufforderung zum Beschaffen einer Bezeichnung des Objekts (103) oder die Bezeichnung des Objekts umfasst, als elektronische Nachricht an ein mobiles Datenerfassungsgerät eines Auftragnehmers (3) durch einen Server eines Auftraggebers;
Bereitstellen eines Softwaremoduls (5), welches, wenn es auf dem mobilen Datenerfassungsgerät, welches wenigstens eine Kamera und ein Positionserfassungssystem umfasst, ausgeführt wird,
- das Positionserfassungssystem veranlasst, eine aktuelle Position des mobilen Datenerfassungsgeräts zu bestimmen und die aktuelle Position repräsentierende Positionsdaten zu erzeugen (9),
- die Kamera veranlasst, ein Bild des Objekts aufzunehmen und das Bild repräsentierende Bilddaten zu erzeugen (7), und
- wenigstens die Bilddaten ausgibt (11);
Empfangen wenigstens der ausgegebenen Bilddaten durch den Server des Auftraggebers (13);
Bestimmen eines Zeitschätzwertes (17) für eine Zeitdauer, welche zwischen dem Bestimmen der aktuellen Position und dem Aufnehmen des Bildes vergangen ist;
Bestimmen eines Abstandsschätzwertes (19) für einen Abstand zwischen dem aktuellen Standort des Objekts und einer Soll-Position des Objekts;
Bestimmen eines ersten Teilzustands des Objekts (21) in Abhängigkeit von dem bestimmten Abstandsschätzwert und dem bestimmten Zeitschätzwert,
wobei der erste Teilzustand des Objekts ein erstes Ergebnis (I) aufweist, wenn der Zeitschätzwert kleiner als ein vorbestimmter Zeitwert ist und der Abstandsschätzwert kleiner als ein vorbestimmter Abstandswert ist, und der erste Teilzustand des Objekts ein zweites Ergebnis (II) aufweist, wenn der Zeitschätzwert nicht kleiner als ein vorbestimmter Zeitwert ist und/oder wenn der Abstandsschätzwert nicht kleiner als ein vorbestimmter Abstandswert ist,
wobei das erste Ergebnis (I) repräsentiert, dass der aktuelle Standort des Objekts in der Nähe der Soll-Position liegt und das Aufnehmen des Bildes und das Bestimmen der aktuellen Position des mobilen Datenerfassungsgeräts zueinander zeitnah erfolgten,
Bestimmen eines zweiten Teilzustands des Objekts durch den Auftraggeber,
wobei der zweite Teilzustand durch eine Analyse des durch die empfangenen Bilddaten repräsentierten Bildes bestimmt wird und davon abhängig ist, ob das Objekt eine definierte Beschaffenheit aufweist; und
Klassifizieren des Zustands des Objekts (27) basierend auf dem ersten Teilzustand und dem zweiten Teilzustand.

2. Verfahren nach Anspruch 1, wobei der erste Teilzustand des Objekts durch einen Funktionswert einer Funktion mit dem bestimmten Abstandsschätzwert und/oder dem bestimmten Zeitschätzwert als Argumenten repräsentiert ist.

3. Verfahren nach Anspruch 1 oder 2, wobei der vorbestimmte Zeitwert kleiner als 5 Stunden, kleiner als 3 Stunden, kleiner als 1 Stunde, kleiner als 30 Minuten oder kleiner als 15 Minuten ist und/oder
wobei der vorbestimmte Abstandswert kleiner als 10 km, kleiner als 5 km, kleiner als 2 km, kleiner als 1 km, kleiner als 500 m, kleiner als 200 m, kleiner als 100 m oder kleiner als 50 m ist.

4. Verfahren nach einem der Ansprüche 1 bis 3, wobei der erste Teilzustand des Objekts durch einen Funktionswert einer Funktion mit einem einzigen Argument repräsentiert ist, wobei das Argument von dem bestimmten Abstandsschätzwert und dem bestimmten Zeitschätzwert abhängig ist.

5. Verfahren nach Anspruch 4, wobei die Funktion prüft, ob ein Quotient aus dem Abstandsschätzwert im Zähler und dem Zeitschätzwert im Nenner kleiner oder gleich einem Geschwindigkeitsschrankenwert ist, welcher kleiner als 200 km/h, kleiner als 100 km/h, kleiner als 75 km/h, kleiner als 50 km/h, kleiner als 30 km/h, kleiner als 10 km/h oder kleiner als 5 km/h ist.

6. Verfahren nach einem der Ansprüche 1 bis 5, wobei eine Zeitdauer (705), welche zwischen dem Senden des Auftrags (3) und dem Empfangen wenigstens der Bilddaten (13) verstreicht, als der Zeitschätzwert bestimmt wird.

7. Verfahren nach einem der Ansprüche 1 bis 5, wobei eine Zeitdauer (703), welche zwischen dem Senden des Auftrags (3) und dem Ausgeben wenigstens der Bilddaten (11) verstreicht, als der Zeitschätzwert bestimmt wird.

8. Verfahren nach einem der Ansprüche 1 bis 5, wobei eine Zeitdauer (701), welche zwischen dem Bestimmen der aktuellen Position (9) und dem Aufnehmen des Bildes (7) verstreicht, als der Zeitschätzwert bestimmt wird.

9. Verfahren nach einem der Ansprüche 1 bis 8,
wobei ein Abstand, welcher auf der durch die Positionsdaten repräsentierten aktuellen Position und der Soll-Position des Objekts basiert, als der Abstandsschätzwert bestimmt wird.

10. Verfahren nach einem der Ansprüche 1 bis 9, wobei der Auftrag eine Aufforderung zum Beschaffen des Softwaremoduls (101) umfasst.

11. Verfahren nach Anspruch 1 bis 10, ferner umfassend ein Beschaffen des Softwaremoduls (107), wobei das Beschaffen des Softwaremoduls insbesondere durch Anmelden an einem Server des Auftraggebers und Beziehen des Softwaremoduls von dem Server des Auftraggebers erfolgt, oder Beziehen des Softwaremoduls von einer Internetplattform oder einem Speichermedium erfolgt;
und/oder
wobei das Beschaffen der Bezeichnung des Objekts durch Anmelden an dem Server des Auftraggebers und Beziehen der Bezeichnung des Objekts von dem Server des Auftraggebers erfolgt;
und/oder
wobei der Auftrag das Softwaremodul umfasst;
und/oder
ferner umfassend ein Installieren des Softwaremoduls (109) auf dem mobilen Datenerfassungsgerät.

12. Verfahren nach einem der Ansprüche 1 bis 11, wobei das Softwaremodul dazu konfiguriert ist, ab dem Senden des Auftrags nur für eine vorbestimmte Dauer wenigstens die Bilddaten auszugeben und insbesondere ausführbar zu sein; und/oder
wobei ein Server des Auftraggebers dazu konfiguriert ist, das Empfangen wenigstens der Bilddaten ab dem Senden des Auftrags nur während einer vorbestimmten Dauer durchzuführen;
und/oder
wobei die vorbestimmte Dauer insbesondere kleiner als 14 Tage, kleiner als 7 Tage, kleiner als 3 Tage, kleiner als 1 Tag, kleiner als 12 Stunden, kleiner als 6 Stunden oder kleiner als 1 Stunde ist.

13. Verfahren nach einem der Ansprüche 1 bis 12,
wobei der Auftraggeber den Zeitschätzwert und/oder den Abstandsschätzwert und/oder den ersten Teilzustand bestimmt und/oder den Zustand des Objekts klassifiziert;
und/oder
wobei das Softwaremodul den Zeitschätzwert und/oder den Abstandsschätzwert und/oder den ersten Teilzustand bestimmt;
und/oder
wobei das Ausgeben wenigstens der Bilddaten ferner ein Ausgeben der Positionsdaten und/oder des Zeitschätzwerts und/oder des Abstandsschätzwerts und/oder des ersten Teilzustands umfasst;
und/oder
wobei das Ausgeben wenigstens der Bilddaten ein Ausgeben auf einen Datenspeicher, insbesondere ein optisches oder magnetisches Speichermedium, umfasst;
und/oder
wobei das Empfangen wenigstens der Bilddaten (13) ferner ein Empfangen der ausgegebenen Positionsdaten und/oder des ausgegebenen Zeitschätzwerts und/oder des ausgegebenen Abstandsschätzwerts und/oder des ausgegebenen ersten Teilzustands umfasst und/oder wobei das Empfangen wenigstens der Bilddaten insbesondere ein Auslesen eines Datenspeichers umfasst;
und/oder
wobei das Senden des Auftrags durch eine SMS oder eine E-Mail erfolgt.

14. Verfahren nach einem der Ansprüche 1 bis 13,
wobei das Softwaremodul die Kamera veranlasst, ein Bild des Objekts aufzunehmen und das Bild repräsentierende Bilddaten zu erzeugen (7), nachdem die aktuelle Position des mobilen Datenerfassungsgeräts bestimmt ist und/oder die aktuelle Position repräsentierende Positionsdaten erzeugt wurden (9);
und/oder
wobei das Softwaremodul eines Benutzers des mobilen Datenerfassungsgeräts ferner zum Ausrichten der Kamera auf das Objekt (201) und zum Auslösen der Aufnahme des Bildes des Objekts (205) auffordert;
und/oder
wobei das Softwaremodul einen Benutzer des mobilen Datenerfassungsgeräts zum Bestätigen der bestimmten, aktuellen Position des mobilen Datenerfassungsgeräts auffordert (303) und wartet, bis eine Eingabe auf die Aufforderung vorliegt, wobei insbesondere die die aktuelle Position repräsentierende Positionsdaten erst erzeugt werden (311), wenn die Bestätigung vorliegt (309);
und/oder
wobei das Auffordern des Benutzers des mobilen Datenerfassungsgeräts einen akustischen Hinweis und/oder einen auf einer Anzeige des mobilen Datenerfassungsgeräts angezeigten visuellen Hinweis (203, 305) umfasst; und/oder
wobei das Positionserfassungssystem die Position des mobilen Datenerfassungsgeräts mittels eines globalen Navigationssatellitensystems und/oder eines Mobilfunksystems bestimmt.

15. Verfahren nach einem der voranstehenden Ansprüche, wobei das mobile Datenerfassungsgerät ein Tablet-PC, ein Mobiltelefon, eine Brille, Uhr oder dergleichen, die eine elektronische Datenverarbeitung bereitstellen, oder ein anderes Computer-ähnliches Gerät ist.
